# EUROPEAN PATENT SPECIFICATION

(11) **EP 3 895 299 B1**
(45) Date of publication and mention of the grant of the patent: **19.06.2024**
(21) Application number: 19723608.6
(22) Date of filing: 30.04.2019
(51) Int. Cl.: H02M 3/07, H02M 3/158, H02M 1/00, H02M 3/00

(54) **HYBRID POWER CONVERTER AND METHOD**
HYBRIDLEISTUNGSWANDLER UND VERFAHREN
CONVERTISSEUR DE PUISSANCE HYBRIDE ET PROCÉDÉ

(30) Priority: 28.12.2018 US 201862786140 P
(43) Date of publication of application: 20.10.2021
(73) Proprietor: Huawei Digital Power Technologies Co., Ltd., Shenzhen, 518043 (CN)
(72) Inventor: DAI, Heping, Plano, Texas 75024 (US)
(74) Representative: Isarpatent
(86) International application number: PCT/US2019/029985
(87) International publication number: WO 2020/149870

(56) References cited:
- US-A1- 2016 197 552
- US-B1- 10 084 384
- SIEW-CHONG TAN ET AL: "Adaptive Mixed On-Time and Switching Frequency Control of a System of Interleaved Switched-Capacitor Converters", IEEE TRANSACTIONS ON POWER ELECTRONICS, INSTITUTE OF ELECTRICAL AND ELECTRONICS ENGINEERS, USA, vol. 26, no. 2, 1 February 2011 (2011-02-01), pages 364-380, XP011334724, ISSN: 0885-8993, DOI: 10.1109/TPEL.2010.2060497
- SITTHISAK KIRATIPONGVOOT ET AL: "Phase-Shift Interleaving Control of Variable-Phase Switched-Capacitor Converters", IEEE TRANSACTIONS ON INDUSTRIAL ELECTRONICS, IEEE SERVICE CENTER, PISCATAWAY, NJ, USA, vol. 60, no. 12, 1 December 2013 (2013-12-01), pages 5575-5584, XP011515857, ISSN: 0278-0046, DOI: 10.1109/TIE.2012.2232259
- DONG CAO ET AL: "Multiphase Multilevel Modular DC DC Converter for High-Current High-Gain TEG Application", IEEE TRANSACTIONS ON INDUSTRY APPLICATIONS, IEEE SERVICE CENTER, PISCATAWAY, NJ, US, vol. 47, no. 3, 1 May 2011 (2011-05-01), pages 1400-1408, XP011477763, ISSN: 0093-9994, DOI: 10.1109/TIA.2011.2125771

## Description

### TECHNICAL FIELD

The present disclosure relates to hybrid power converters, and the invention in particular, relates methods for providing a hybrid power converter.

### BACKGROUND

As technologies further advance, artificial intelligence (Al) has emerged as an effective alternative to further improve the capability of the computing technology. AI based computing machines exhibit human intelligence such as perceiving, learning, reasoning and solving problems.

The Al based computing machines may be implemented as graphical processing units (GPU). The graphical processing units allow for performance gains through parallel computations. As the computing power of the graphical processing units has increased, the demand for electrical power has continued to rise.

In order to efficiently power low-voltage, high current loads (*e.g*., graphical processing units), a direct-to-chip power architecture has been employed. For example, the input of the direct-to-chip power architecture is a 48-Volt distribution bus. The output of the direct-to-chip power architecture is an IC voltage as low as 0.7 V. The current flowing through the direct-to-chip power architecture is up to 1000 A. In the direct-to-chip power architecture, the switching elements need to operate at a small duty cycle of about 2%. In addition, the inductor of the direct-to-chip power architecture has to endure high current stress.

Switch-capacitor power converters can achieve high efficiency for high step-down and/or high step-up voltage ratio power applications. A typical switch-capacitor power converter can only have a fixed voltage conversion ratio. As a result of having this fixed voltage conversion ratio, the switch-capacitor power converters cannot regulate the output voltage under various operating conditions.

US 2016/197552 A1 relates to an apparatus for processing electric power including a power-converter having a path for power flow between a first and second power-converter terminals. The first and second power-converter terminals are maintained at respective first and second voltages during operation. Two regulating circuits and a switching network are disposed of on the path. The first regulating circuit includes a magnetic storage element and a first regulating circuit terminal. The second regulating circuit includes a second regulating circuit terminal. The first regulating circuit terminal is connected to the first switching network terminal and the second regulating circuit terminal is connected to the second switching network terminal. The switching network transitions between a first switch configuration and a second switch configuration. In the first switch configuration, the charge accumulates in the first charge storage element at a first rate. In the second switch configuration, the charge is depleted from the first charge storage element at a second rate. These rates are constrained by the magnetic storage element.

US 10 084 384 B1 relates to a method and apparatus for a switch mode power supply. The switch mode power supply is efficient and generates a very small inductor current ripple and output voltage ripple. The switch mode power supply has a wider bandwidth and filter components. The filter components further include a magnetic storage element and an output capacitor. The small inductor current ripple and output voltage ripple enables a reduction of the size of the inductor.

The paper by Siew-Chong Tan, et al., "Adaptive Mixed On-Time and Switching Frequency Control of a System of Interleaved Switched-Capacitor Converters, IEEE TRANSACTIONS ON POWER ELECTRONICS, VOL. 26, NO. 2, FEBRUARY 2011 relates to a configuration of SC converters connected in parallel. The inputs and outputs of the SC converters are interleaved and adaptively controlled. The interleaving operation is performed by using an original type of control to adjust the charging time TON and switching frequency of both the capacitors to get the line and load regulation. For a given range of variation of the supply voltage and load, a solution that assures both output voltage regulation and perfect interleaving is disclosed. Further, experimental results validate the feasibility of the proposed scheme. Precise interleaving, a good line, and load regulation are maintained for all the designated ranges, including the transient periods.

The paper by Sitthisak Kiratipongvoot, et al., "Phase-Shift Interleaving Control of Variable-Phase Switched-Capacitor Converters, IEEE TRANSACTIONS ON INDUSTRIAL ELECTRONICS, VOL. 60, NO. 12, DECEMBER 2013 relates to a phase-shift interleaving control method for variable phase switched capacitor converters. The variable phase switched capacitor converters perform voltage conversions with little electromagnetic interference over a wide range of operating conditions. This is achieved by having multiple units of SC converter connected in parallel and an N-state hysteresis unit selection control scheme. The N-state hysteresis unit selection control scheme works along the interleaving control to vary the number of converters in operation. By connecting the capacitors of inactive units to the output and the converters operating with output interleaving operation, the output capacitor in the SC converters required for maintaining a small voltage ripple is made redundant in this configuration. A three-unit SC converter of the proposed configuration is discussed. Further, experimental results show that the proposed solution works satisfactorily with good regulation, input and output interleaving operations, and dynamic response for a wide operating range.

The paper by Dong Cao and Fang Zheng Peng, "Multiphase Multilevel Modular DC-DC Converter for High-Current High-Gain TEG Application", IEEE TRANSACTIONS ON INDUSTRY APPLICATIONS, VOL. 47, NO 3, MAY/JUNE 2011, relates to the interleaved operation of cascaded buck-boost converter cells.

In some applications such as high current and high voltage conversion ratio applications, it would be desirable to have a power converter capable of achieving high efficiency under a variety of operating conditions.

### SUMMARY

The object of the present invention is to provide hybrid buck-boost power conversion systems, comprising a plurality of buck-boost cells, for improving the performance of power conversion systems in high step-down and/or high step-up voltage ratio applications. This object is solved by the independent claims and further advantageous embodiments and improvements of the invention are listed in the dependent claims. Hereinafter, expressions like "...aspect according to the invention" or "according to the invention" or similar relate to technical teaching of the broadest embodiment as claimed with the independent claims. Expressions like "implementation", "scenario" or "optionally" or "optional design" or "may", relate to claimed embodiments, and expressions like "examples" or "according to an example" relate to technical teaching which contributes to the understanding of the claimed invention.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates a block diagram of a hybrid power conversion system in accordance with various embodiments of the present disclosure;
Figure 2 illustrates a schematic diagram of the hybrid power conversion system shown in Figure 1 in accordance with various embodiments of the present disclosure;
Figure 3 illustrates a block diagram of another hybrid power conversion system in accordance with various embodiments of the present disclosure;
Figure 4 illustrates a schematic diagram of the hybrid power conversion system shown in Figure 3 in accordance with various embodiments of the present disclosure;
Figure 5 illustrates a schematic diagram of a reduced-phase hybrid power conversion system in accordance with various embodiments of the present disclosure;
Figure 6 illustrates a schematic diagram of another hybrid power conversion system in accordance with various embodiments of the present disclosure;
Figure 7 illustrates a schematic diagram of yet another hybrid power conversion system in accordance with various embodiments of the present disclosure;
Figure 8 illustrates a schematic diagram of yet another hybrid power conversion system in accordance with various embodiments of the present disclosure;
Figure 9 illustrates a schematic diagram of yet another hybrid power conversion system in accordance with various embodiments of the present disclosure;
Figure 10 illustrates a flow chart of a method for controlling the hybrid power conversion system shown in Figure 1 in accordance with various embodiments of the present disclosure;
Figure 11 illustrates a flow chart of another method for controlling the hybrid power conversion system shown in Figure 1 in accordance with various embodiments of the present disclosure;
Figure 12 illustrates a block diagram of yet another hybrid power conversion system in accordance with various embodiments of the present disclosure;
Figure 13 illustrates a block diagram of a four-cell hybrid power conversion system in accordance with various embodiments of the present disclosure;
Figure 14 illustrates a schematic diagram of the four-cell hybrid power conversion system shown in Figure 13 in accordance with various embodiments of the present disclosure;
Figure 15 illustrates a first control scheme applied to the four-cell hybrid power conversion system shown in Figure 13 in accordance with various embodiments of the present disclosure;
Figure 16 illustrates a second control scheme applied to the four-cell hybrid power conversion system shown in Figure 13 in accordance with various embodiments of the present disclosure;
Figure 17 illustrates a schematic diagram of a first implementation of the four-cell hybrid power conversion system shown in Figure 16 in accordance with various embodiments of the present disclosure;
Figure 18 illustrates a schematic diagram of a second implementation of the four-cell hybrid power conversion system shown in Figure 16 in accordance with various embodiments of the present disclosure;
Figure 19 illustrates a schematic diagram of a third implementation of the four-cell hybrid power conversion system shown in Figure 16 in accordance with various embodiments of the present disclosure;
Figure 20 illustrates a third control scheme applied to the four-cell hybrid power conversion system shown in Figure 13 in accordance with various embodiments of the present disclosure;
Figure 21 illustrates a schematic diagram of an implementation of the four-cell hybrid power conversion system shown in Figure 20 in accordance with various embodiments of the present disclosure;
Figure 22 illustrates a block diagram of a 12-cell hybrid power conversion system in accordance with various embodiments of the present disclosure;
Figure 23 illustrates a block diagram of yet another hybrid power conversion system in accordance with various embodiments of the present disclosure;
Figure 24 illustrates a block diagram of an eight-cell hybrid power conversion system in accordance with various embodiments of the present disclosure;
Figure 25 illustrates a timing diagram of a first implementation of the gate control scheme of the eight-cell hybrid power conversion system shown in Figure 24 in accordance with various embodiments of the present disclosure;
Figure 26 illustrates a timing diagram of a second implementation of the gate control scheme of the eight-cell hybrid power conversion system shown in Figure 24 in accordance with various embodiments of the present disclosure;
Figure 27 illustrates a timing diagram of a third implementation of the gate control scheme of the eight-cell hybrid power conversion system shown in Figure 24 in accordance with various embodiments of the present disclosure;
Figure 28 illustrates a block diagram of a hybrid buck-boost power conversion system in accordance with various embodiments of the present disclosure;
Figure 29 illustrates a schematic diagram of the hybrid buck-boost power conversion system shown in Figure 28 in accordance with various embodiments of the present disclosure;
Figure 30 illustrates a schematic diagram of a reduced-phase hybrid buck-boost power conversion system in accordance with various embodiments of the present disclosure;
Figure 31 illustrates a schematic diagram of another hybrid buck-boost power conversion system in accordance with various embodiments of the present disclosure;
Figure 32 illustrates a schematic diagram of another hybrid buck-boost power conversion system in accordance with various embodiments of the present disclosure;
Figure 33 illustrates a block diagram of another hybrid buck-boost power conversion system in accordance with various embodiments of the present disclosure;
Figure 34 illustrates a schematic diagram of the hybrid buck-boost power conversion system shown in Figure 33 in accordance with various embodiments of the present disclosure;
Figure 35 illustrates a schematic diagram of another hybrid buck-boost power conversion system in accordance with various embodiments of the present disclosure;
Figure 36 illustrates a schematic diagram of a reduced-phase hybrid buck-boost power conversion system in accordance with various embodiments of the present disclosure;
Figure 37 illustrates a schematic diagram of another hybrid buck-boost power conversion system in accordance with various embodiments of the present disclosure;
Figure 38 illustrates a block diagram of yet another hybrid buck-boost power conversion system in accordance with various embodiments of the present disclosure;
Figure 39 illustrates a block diagram of yet another hybrid buck-boost power conversion system in accordance with various embodiments of the present disclosure;
Figure 40 illustrates a block diagram of a two-stage power conversion system in accordance with various embodiments of the present disclosure; and
Figure 41 illustrates a block diagram of another two-stage power conversion system in accordance with various embodiments of the present disclosure.

Corresponding numerals and symbols in the different figures generally refer to corresponding parts unless otherwise indicated. The figures are drawn to clearly illustrate the relevant aspects of the various embodiments and are not necessarily drawn to scale.

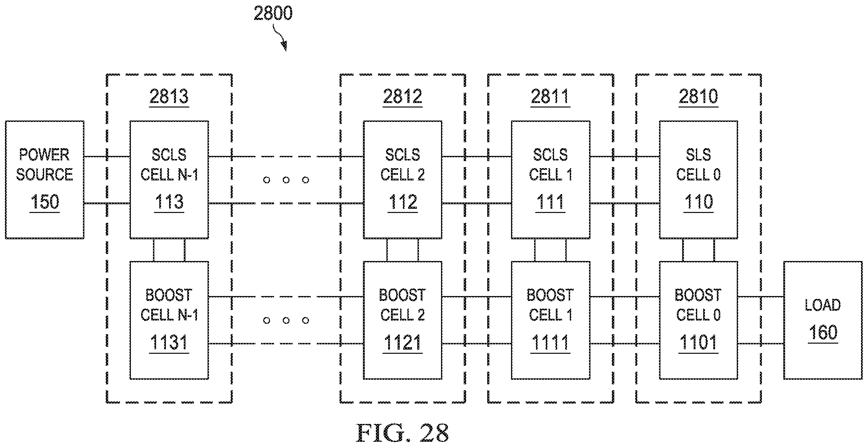

The subject-matter of the independent claims 1 and 9 is reflected by the embodiments shown in fig. 28, 29 and 33, 34, respectively. The embodiments shown in the other figures provide supplementary information for understanding the invention.

### DETAILED DESCRIPTION OF ILLUSTRATIVE EMBODIMENTS

The making and using of the presently preferred embodiments are discussed in detail below. It should be appreciated, however, that the present disclosure provides many applicable inventive concepts that can be embodied in a wide variety of specific contexts. The specific embodiments discussed are merely illustrative of specific ways to make and use the disclosure, and do not limit the scope of the disclosure.

The present disclosure will be described with respect to preferred embodiments in a specific context, namely a hybrid power converter. The present disclosure may also be applied, however, to a variety of power conversion systems. Hereinafter, various embodiments will be explained in detail with reference to the accompanying drawings.

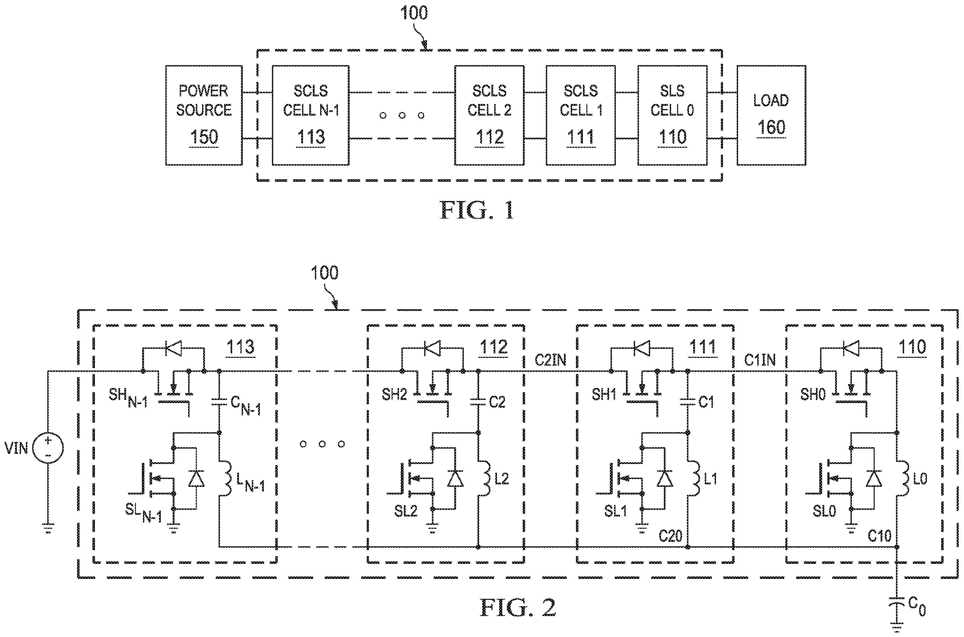

Figure 1 illustrates a block diagram of a hybrid power conversion system in accordance with various embodiments of the present disclosure. The hybrid power conversion system 100 is connected between a power source 150 and a load 160. The hybrid power conversion system 100 is a step-down power conversion system converting energy from a voltage bus to a low voltage and high current load.

In some embodiments, the power source 150 is implemented as a 48-Volt direct current distribution bus. Alternatively, the power source 150 may be implemented as other suitable dc power sources such as a solar panel, an energy storage unit, a battery pack, a power converter converting energy from the utility line, a power generator, a renewable power source, any combinations thereof and the like. The load 160 may be a processor such as a central processing unit (CPU), a graphics processing unit (GPU), an application-specific integrated circuit (ASIC), any combinations thereof and the like. Alternatively, the load 160 may be a plurality of downstream power converters.

The hybrid power conversion system 100 comprises a plurality of power conversion cells connected in cascade between the power source 150 and the load 160 as shown in Figure 1. In some embodiments, the plurality of power conversion cells comprises one switch-inductor-switch (SLS) cell and a plurality of switch-capacitor-inductor-switch (SCLS) cells. As shown in Figure 1, the hybrid power conversion system 100 comprises N power conversion cells, where N is a predetermined integer. A first power conversion cell 110 is directly connected to the load 160. In some embodiments, the first power conversion cell 110 is an SLS cell. The other power conversion cells *(e.g.,* power conversion cells 111, 112 and 113) are connected between the first power conversion cell 110 and the power source 150. In some embodiments, the power conversion cells 111, 112 and 113 are SCLS cells.

In the hybrid power conversion system 100, the SLS cell comprises a high-side switch, a low-side switch and an inductor. Each SCL cell comprises a high-side switch, a capacitor, a low-side switch and an inductor. In some embodiments, the conducting periods of the high-side switches are equal. The duty cycle D of the hybrid power conversion system 100 is defined as the conducting period of a high-side switch divided by a switching cycle of the hybrid power conversion system 100.

In operation, the current flowing through the hybrid power conversion system 100 is distributed evenly among the inductors of the plurality of power conversion cells shown in Figure 1. In other words, the average current flowing through the inductor of each power conversion cell is equal to the average load current divided by N. The output voltage of the hybrid power conversion system 100 is equal to (D·VIN)/N. D is the duty cycle of each power conversion cell and VIN is the output voltage of the power source 150.

In operation, the plurality of power conversion cells may be configured to operate in a plurality of operating phases. In some embodiments, a switching cycle is divided into N equal periods. Each period is an operating phase. The N power conversion cells of Figure 1 are configured to operate in N operating phases. Each power conversion cell is configured to operate in a corresponding phase. In alternative embodiments, a switching cycle is divided into two equal periods. Each period is an operating phase. The N power conversion cells of Figure 1 are configured to operate in two operating phases. More particularly, the power conversion cells of Figure 1 are divided into two groups. For example, a first group can be an even numbered group (*e.g*., cells 110 and 112) and a second group can be an odd numbered group (*e.g*., cells 111 and 113). Two adjacent cells are not allocated into a same group. The first group operates in a first operating phase. The second group operates in a second operating phase. Moreover, depending on different applications and design needs, the switching cycle is divided into M equal periods. M is in a range from 2 to N. The N power conversion cells of Figure 1 are configured to operate in M operating phases. At least two power conversion cells are configured to operate in a same operating phase.

Figure 2 illustrates a schematic diagram of the hybrid power conversion system shown in Figure 1 in accordance with various embodiments of the present disclosure. As shown in Figure 2, a plurality of power conversion cells 110, 111, 112 and 113 is connected in cascade between an input voltage VIN and an output capacitor Co. In some embodiments, the input voltage VIN is generated by the power source 150 shown in Figure 1. The output capacitor Co is employed to provide a steady voltage for the load 160 shown in Figure 1.

As shown in Figure 2, the first power conversion cell 110 is an SLS cell. Throughout the description, the first power conversion cell 110 may be alternatively referred to as the SLS cell 110. The other power conversion cells 111, 112 and 113 are SCLS cells. Throughout the description, the other power conversion cells may be alternatively referred to as their respective SCLS cells. For example, the second power conversion cell 111 may be alternatively referred to as the SCLS cell 111.

As shown in Figure 2, the SLS cell 110 comprises a high-side switch SH0, a low-side switch SL0 and an inductor L0. The high-side switch SH0 and the low-side switch SL0 are connected in series between an input terminal C1IN of the SLS cell 110 and ground. The inductor L0 is connected between a common node of SH0 and SL0, and an output terminal C1O of the SLS cell 110.

The power conversion cells 111, 112 and 113 have the same power topology. For simplicity, only the structure of the SCLS cell 111 is discussed herein. The SCLS cell 111 comprises a high-side switch SH1, a capacitor C1, a low-side switch SL1 and an inductor L1. As shown in Figure 2, the high-side switch SH1, the capacitor C1 and the low-side switch SL1 are connected in series between an input terminal C2IN of the SCLS cell 111 and ground. The common node of the high-side switch SH1 and the capacitor C1 is a first output of the SCLS cell 111, which is connected to the input of the SLS cell 110. The inductor L1 is connected between a common node of C1 and SL1, and an output terminal C2O of the SCLS cell 111.

In operation, the switches of hybrid power conversion system 100 are able to achieve zero voltage switching (ZVS). In each switching cycle, the current flowing through the inductor of each cell varies from a positive value to zero and further goes negative to achieve ZVS. The ZVS operation helps to achieve higher efficiency and lower electromagnetic interference (EMI).

As shown in Figure 2, the input of the SCLS cell 113 is connected to the input voltage VIN. Each SCLS cell has two outputs. A first output of each SCLS cell is connected to an input of an adjacent power conversion cell. Second outputs of the SCLS cells and the output of the SLS cell are connected together and further connected to the output capacitor Co of the hybrid power conversion system 100.

The hybrid power conversion system 100 comprises N power conversion cells. As shown in Figure 2, these N power conversion cells have (N-1) capacitors, N inductors and (2·N) switches. In some embodiments, the voltage stress of the high-switch SH_{N-1} is equal to VIN/N. The voltage stress of the other high-switch switches (*e.g*., SH0, SH1 and SH2) is equal to (2·VIN)/N. The voltage stress of the low-side switches (*e.g*., SL0, SL1, SL2 and SL_{N-1}) is equal to VIN/N.

In accordance with an embodiment, the switches of Figure 2 (*e.g.,* switches SH0-SH_{N-1} and SL0-SL_{N-1}) may be metal oxide semiconductor field-effect transistor (MOSFET) devices. Alternatively, the switching element can be any controllable switches such as insulated gate bipolar transistor (IGBT) devices, integrated gate commutated thyristor (IGCT) devices, gate turn-off thyristor (GTO) devices, silicon controlled rectifier (SCR) devices, junction gate field-effect transistor (JFET) devices, MOS controlled thyristor (MCT) devices and the like.

It should be noted while Figure 2 shows the switches SH0-SH_{N-1} and SL0-SL_{N-1} are implemented as single n-type transistors, a person skilled in the art would recognize there may be many variations, modifications and alternatives. For example, depending on different applications and design needs, at least some of the switches SH0-SH_{N-1} and SL0-SL_{N-1} may be implemented as p-type transistors. Furthermore, each switch shown in Figure 2 may be implemented as a plurality of switches connected in parallel. Moreover, a capacitor may be connected in parallel with one switch to achieve zero voltage switching (ZVS)/zero current switching (ZCS).

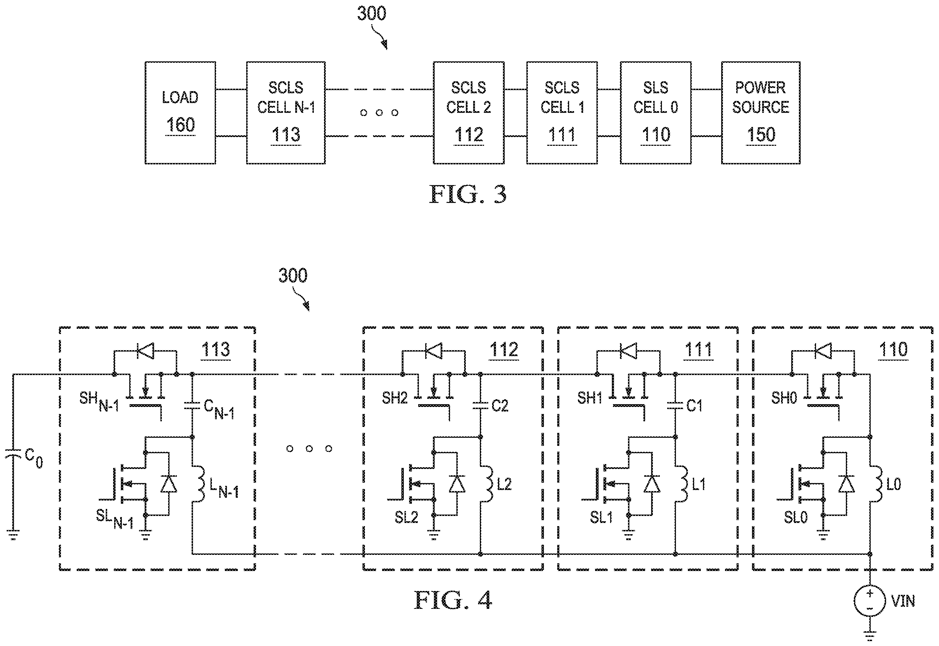

Figure 3 illustrates a block diagram of another hybrid power conversion system in accordance with various embodiments of the present disclosure. The hybrid power conversion system 300 is similar to the hybrid power conversion system 100 shown in Figure 1 except that the hybrid power conversion system 300 is configured as a step-up power conversion system converting energy from a low voltage bus to a high voltage and low current load.

As shown in Figure 3, the SLC cell 110 is connected to the power source 150. The plurality of SCLS cells 111, 112 and 113 is connected in cascade between the SLC cell 110 and the load 160. By swapping the power source 150 and the load 160, the hybrid power conversion system 300 functions as a step-up power converter.

Figure 4 illustrates a schematic diagram of the hybrid power conversion system shown in Figure 3 in accordance with various embodiments of the present disclosure. The hybrid power conversion system 300 shown in Figure 4 is similar to the hybrid power conversion system 100 shown in Figure 2 except that the power source VIN is connected to the SLC cell 110 and the load is connected to the SCLS cell 113. The output voltage of the hybrid power conversion system 300 is equal to (N·VIN)/D. D is the duty cycle of each power conversion cell.

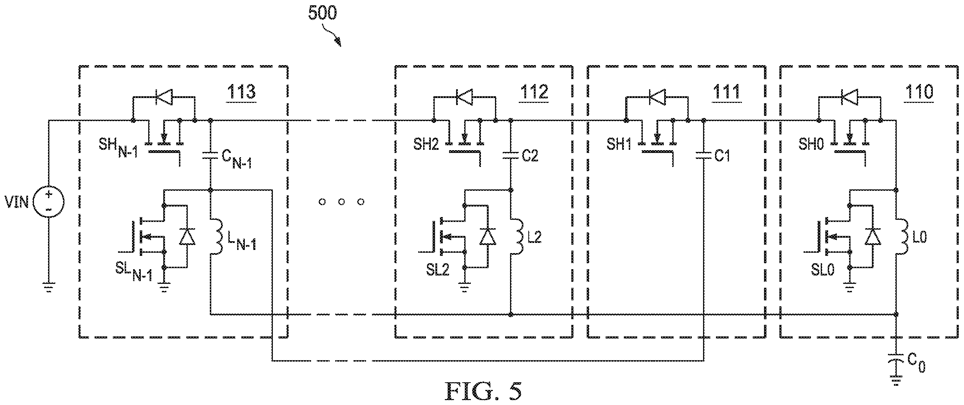

Figure 5 illustrates a schematic diagram of a reduced-phase hybrid power conversion system in accordance with various embodiments of the present disclosure. The reduced-phase hybrid power conversion system 500 shown in Figure 5 is similar to the hybrid power conversion system 100 shown in Figure 2 except that at least two power conversion cells share a low-side switch and a corresponding inductor. As shown in Figure 5, the reduced-phase hybrid power conversion system 500 comprises N power conversion cells. In some embodiments, power conversion cells 111 and 113 are configured to operate in a same operating phase. These two power conversion cells can share a same low-side switch and a same inductor. As shown in Figure 5, the capacitor C1 of the power conversion cell 111 is connected to the common node of the low-side switch SL_{N-1} and the inductor L_{N-1}.

It should be noted that the reduced phase operation used in Figure 5 is selected purely for demonstration purposes and are not intended to limit the various embodiments of the present disclosure to any particular reduced-phase configurations. One of ordinary skill in the art would recognize many variations, alternatives, and modifications. For example, more than two power conversion cells can share a low-side switch and an inductor if these power conversion cells are configured to operate in a same operating phase.

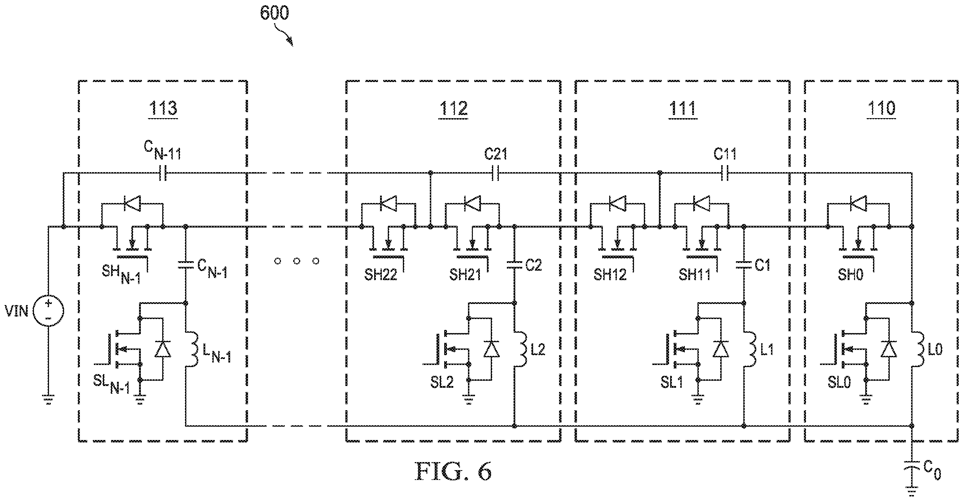

Figure 6 illustrates a schematic diagram of another hybrid power conversion system in accordance with various embodiments of the present disclosure. The hybrid power conversion system 600 shown in Figure 6 is similar to the hybrid power conversion system 100 shown in Figure 2 except that the voltage stress of the high-side switch has been reduced through employing additional high-side switches and clamping capacitors. As shown in Figure 6, the SLS cell 110 comprises two switches and one inductor. The SCLS cells 111 and 112 comprise one additional switch and one additional capacitor. For example, the SCLS cell 111 comprises high-side switches SH11, SH12, capacitors C1, C11, low-side switch SL1 and an inductor L1. The additional high-side switch SH12 and the clamping capacitor C11 help to achieve a same voltage stress across all switches of the hybrid power conversion system 600. In particular, each switch of Figure 6 is of a voltage stress of VIN/N.

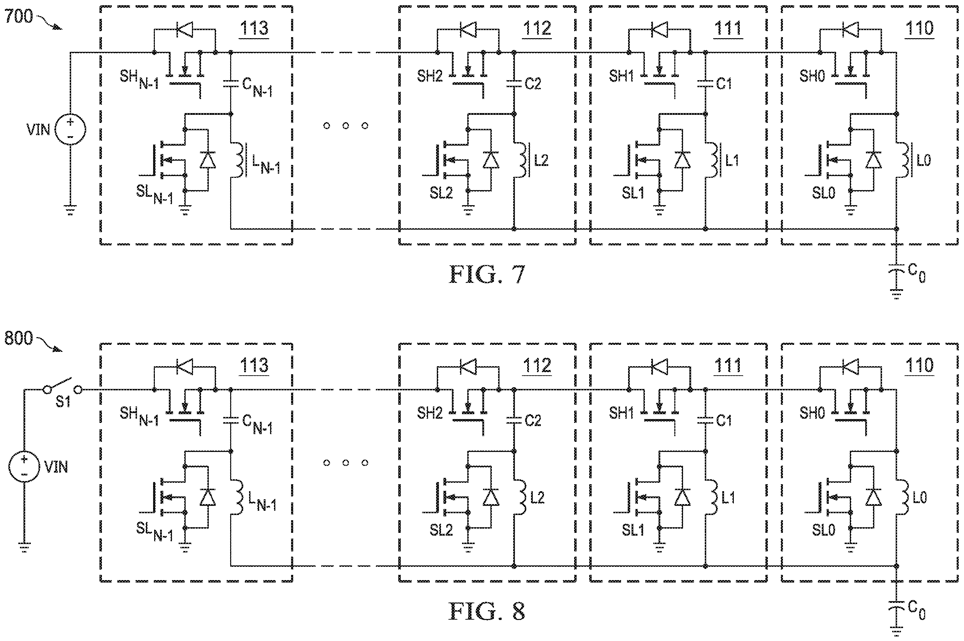

Figure 7 illustrates a schematic diagram of yet another hybrid power conversion system in accordance with various embodiments of the present disclosure. The hybrid power conversion system 700 shown in Figure 7 is similar to the hybrid power conversion system 100 shown in Figure 2 except that the inductors of the plurality of power conversion cells are magnetically coupled to each other.

It should be noted that the magnetic coupling used in Figure 7 is selected purely for demonstration purposes and are not intended to limit the various embodiments of the present disclosure to any particular magnetic coupling configurations. One of ordinary skill in the art would recognize many variations, alternatives, and modifications. For example, it is not necessary to have all inductors magnetically coupled to each other. In some embodiments, only a predetermined number of inductors are magnetically coupled to each other.

Figure 8 illustrates a schematic diagram of yet another hybrid power conversion system in accordance with various embodiments of the present disclosure. The hybrid power conversion system 800 shown in Figure 8 is similar to the hybrid power conversion system 100 shown in Figure 2 except that the hybrid power conversion system 800 comprises a startup switch S1. In some embodiments, the startup switch S1 functions as a linear regulator or a low dropout (LDO) regulator during the startup process of the hybrid power conversion system 800. More particularly, the startup switch S1 is controlled such that the capacitors of the hybrid power conversion system 800 are pre-charged to suitable voltage levels. In addition, the startup switch S1 is employed to control the inrush current during the startup process of the hybrid power conversion system 800.

In accordance with an embodiment, the startup switch S1 may be a MOSFET device. Alternatively, the startup switch S1 can be any controllable switches such as IGBT, IGCT, GTO, SCR, JFET, MCT and the like.

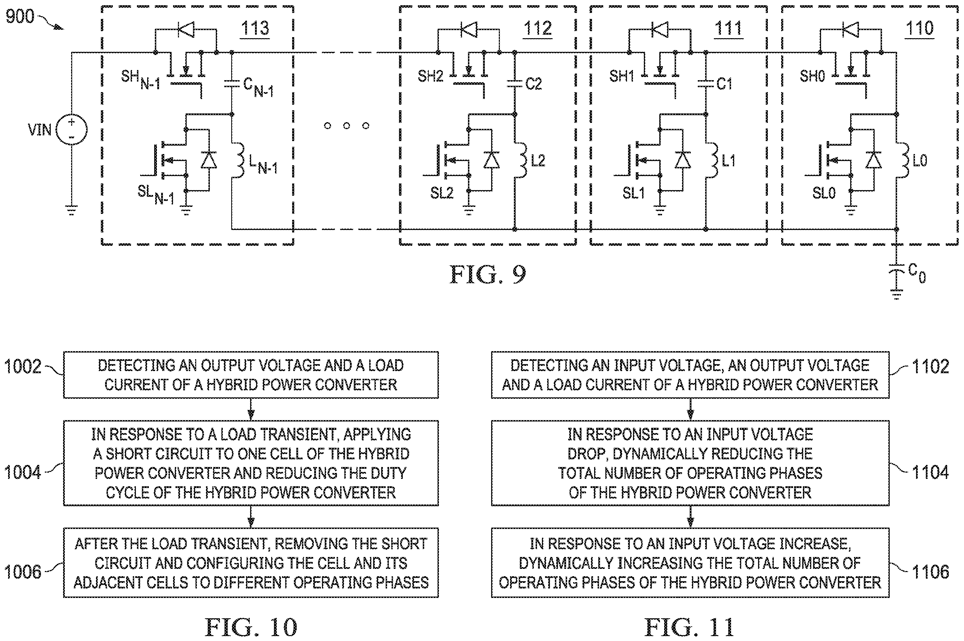

Figure 9 illustrates a schematic diagram of yet another hybrid power conversion system in accordance with various embodiments of the present disclosure. The hybrid power conversion system 900 shown in Figure 9 is similar to the hybrid power conversion system 800 shown in Figure 8 except that the startup switch S1 and the high-side switch of the power conversion cell 113 have been merged into a single switch.

During the startup process of the hybrid power conversion system 900, the startup switch S1 is controlled such that the capacitors of the hybrid power conversion system 900 are pre-charged to suitable voltage levels. After the startup process of the hybrid power conversion system 900 finishes, the startup switch S1 functions as a high-side switch.

Figure 10 illustrates a flow chart of a method for controlling the hybrid power conversion system shown in Figure 1 in accordance with various embodiments of the present disclosure. This flowchart shown in Figure 10 is merely an example, which should not unduly limit the scope of the claims. One of ordinary skill in the art would recognize many variations, alternatives, and modifications. For example, various steps illustrated in Figure 10 may be added, removed, replaced, rearranged and repeated.

Referring back to Figure 1, the hybrid power conversion system 100 comprises N power conversion cells. The N power conversion cells are configured to operate in M operating phases. M is in a range from 2 to N. In operation, the total number of the operating phases can be dynamically adjusted so as to improve the performance of the hybrid power conversion system 100.

At step 1002, a first sensing device is configured to detect an output voltage of the hybrid power conversion system. A second sensing device is configured to detect a load current of the hybrid power conversion system.

At step 1004, in response to a load transient, a short circuit is applied to one power conversion cell of the hybrid power conversion system. The short circuit is implemented by keeping the high-side switch of the power conversion cell always on and the low-side switch of the power conversion cell always off. By shorting a power conversion cell, the total number of the power conversion cells is reduced by 1. As a result, the output voltage of the hybrid power conversion system increases accordingly.

At step 1006, after the load transient finishes, the short circuit is removed from the power conversion cell. The power conversion cell and its adjacent power conversion cells are configured to operate in different operating phases.

Figure 11 illustrates a flow chart of another method for controlling the hybrid power conversion system shown in Figure 1 in accordance with various embodiments of the present disclosure. This flowchart shown in Figure 11 is merely an example, which should not unduly limit the scope of the claims. One of ordinary skill in the art would recognize many variations, alternatives, and modifications. For example, various steps illustrated in Figure 11 may be added, removed, replaced, rearranged and repeated.

Referring back to Figure 1, the hybrid power conversion system 100 comprises N power conversion cells. The N power conversion cells are configured to operate in M operating phases. M is in a range from 2 to N. In operation, the total number of the operating phases can be dynamically adjusted so as to improve the performance of the hybrid power conversion system 100.

At step 1102, a plurality of sensing devices is configured to detect an input voltage, an output voltage and/or a load current of the hybrid power conversion system.

At step 1104, in response to an operating condition change such as an input voltage drop, a controller dynamically reduces the total number of operating phases of the hybrid power conversion system. For example, before the operating condition change, the hybrid power conversion system is configured to operate in four operating phases. The maximum duty cycle is 25%. After the operating condition change, the plurality of power conversion cells of the hybrid power conversion system is configured to operate in two operating phases. The maximum duty cycle is increased from 25% to 50%.

At step 1106, in response to another operating condition change such as an input voltage increase, a controller dynamically increases the total number of operating phases of the hybrid power conversion system. For example, before the operating condition change, the hybrid power conversion system is configured to operate in four operating phases. The maximum duty cycle is 25%. After the operating condition change, the plurality of power conversion cells of the hybrid power conversion system is configured to operate in eight operating phases. As a result, the maximum duty cycle is reduced from 25% to 12.5%.

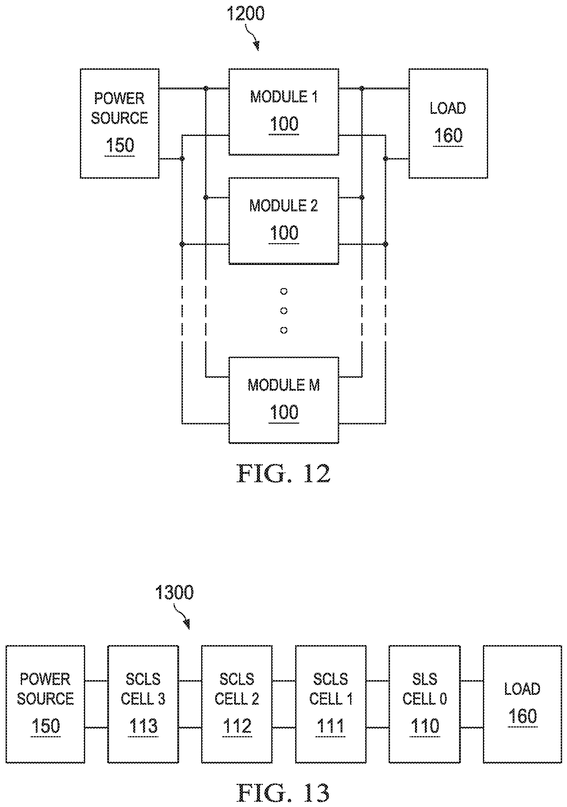

Figure 12 illustrates a block diagram of yet another hybrid power conversion system in accordance with various embodiments of the present disclosure. The hybrid power conversion system 1200 comprises a plurality of power modules connected in parallel between the power source 150 and the load 160. Each power module may be implemented as the hybrid power conversion system 100 shown in Figure 2. Alternatively, each power module of Figure 12 may be implemented as any suitable power conversion circuits shown in the present disclosure. For example, each power module may be implemented as the reduced-phase hybrid power conversion system 500 shown in Figure 5. Alternatively, the power modules of Figure 12 may be implemented as a combination of the hybrid power conversion system 100 and the reduced-phase hybrid power conversion system 500.

Referring back to Figure 2, the hybrid power conversion system 100 comprises N power conversion cells. The N power conversion cells may be configured to operate in K operating phases. K is a predetermined integer. There are M modules shown in Figure 12. There is a phase shift between two adjacent modules. The operating phases in each module and the phase shift between the adjacent modules help to achieve an interleaved operation, thereby reducing the input current ripple and the output current ripple. The frequency of the current ripple is equal to K·M·fs, where fs is the switching frequency of the hybrid power conversion system 1200.

Figure 13 illustrates a block diagram of a four-cell hybrid power conversion system in accordance with various embodiments of the present disclosure. The four-cell hybrid power conversion system 1300 is similar to the hybrid power conversion system 100 shown in Figure 1 except that the four-cell hybrid power conversion system 1300 only has three SCLS cells. The structure and the operating principle of the SCLS cell and SLS cell have been described above with respect to Figures 1-2, and hence are not discussed herein.

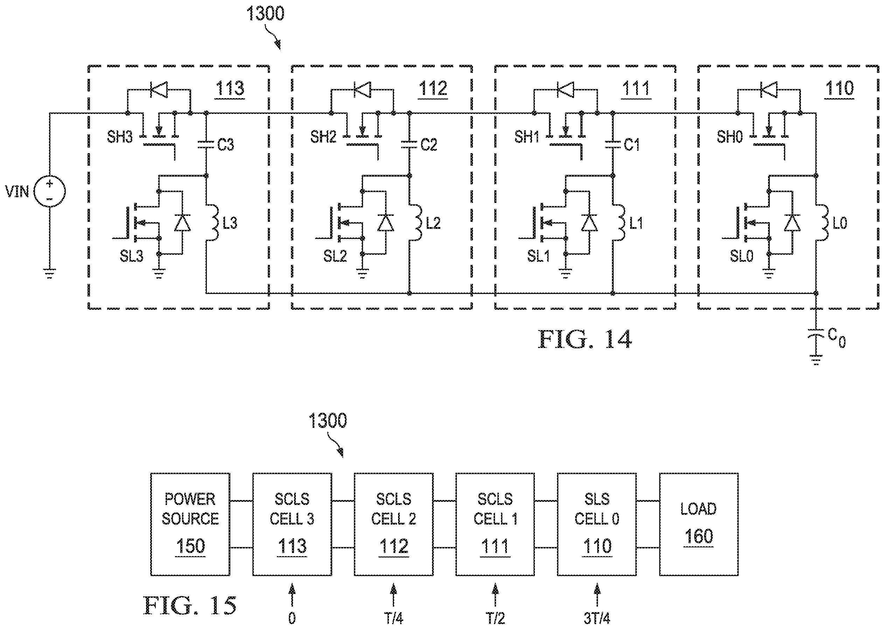

Figure 14 illustrates a schematic diagram of the four-cell hybrid power conversion system shown in Figure 13 in accordance with various embodiments of the present disclosure. The four-cell hybrid power conversion system 1300 is similar to the hybrid power conversion system 100 shown in Figure 2 except that the four-cell hybrid power conversion system 1300 only has three SCLS cells one SLS cell. The structure and the operating principle of the SCLS cell and SLS cell have been described above with respect to Figure 2, and hence are not discussed herein.

Figure 15 illustrates a first control scheme applied to the four-cell hybrid power conversion system shown in Figure 13 in accordance with various embodiments of the present disclosure. In some embodiments, the four-cell hybrid power conversion system 1300 is configured to operate in four different operating phases. In response to the four different operating phases, a switching cycle of the four-cell hybrid power conversion system 1300 is divided into four equal portions. The high-side switch of the SCLS cell 113 is turned on in a first portion ranging from 0 to T/4. The high-side switch of the SCLS cell 112 is turned on in a second portion ranging from T/4 to T/2. The high-side switch of the SCLS cell 111 is turned on in a third portion ranging from T/2 to 3T/4. The high-side switch of the SLS cell 110 is turned on in a fourth portion ranging from 3T/4 to T.

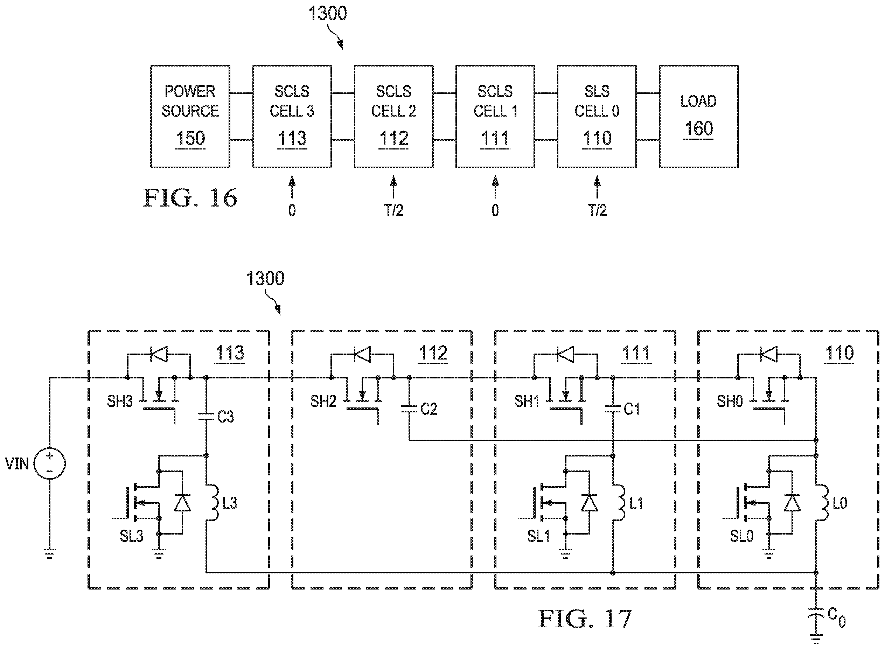

Figure 16 illustrates a second control scheme applied to the four-cell hybrid power conversion system shown in Figure 13 in accordance with various embodiments of the present disclosure. In some embodiments, the four-cell hybrid power conversion system 1300 is configured to operate in two different operating phases. In response to the two different operating phases, a switching cycle of the four-cell hybrid power conversion system 1300 is divided into two equal portions. The high-side switch of the SCLS cell 113 is turned on in a first portion ranging from 0 to T/2. The high-side switch of the SCLS cell 112 is turned on in a second portion ranging from T/2 to T. The high-side switch of the SCLS cell 111 is turned on in the first portion ranging from 0 to T/2. The high-side switch of the SLS cell 110 is turned on in the second portion ranging from T/2 to T.

In some embodiments, since these two cells are configured to operate in a same operating phase, the SCLS cell 113 and the SCLS cell 111 may share a same low-side switch and a same inductor. Likewise, the SCLS cell 112 and the SLS cell 110 may share a same low-side switch and a same inductor since these two cells are configured to operate in a same operating phase. The low-side switch and inductor sharing configurations will be described below with respect to Figures 17-19.

Figure 17 illustrates a schematic diagram of a first implementation of the four-cell hybrid power conversion system shown in Figure 16 in accordance with various embodiments of the present disclosure. Since the SCLS cell 112 and the SLS cell 110 are configured to operate in a same operating phase, the low-side switches and the inductors of these two cells can be merged together. As shown in Figure 17, the SCLS cell 112 and the SLS cell 110 share a same low-side switch SL0 and a same inductor L0 as shown in Figure 17.

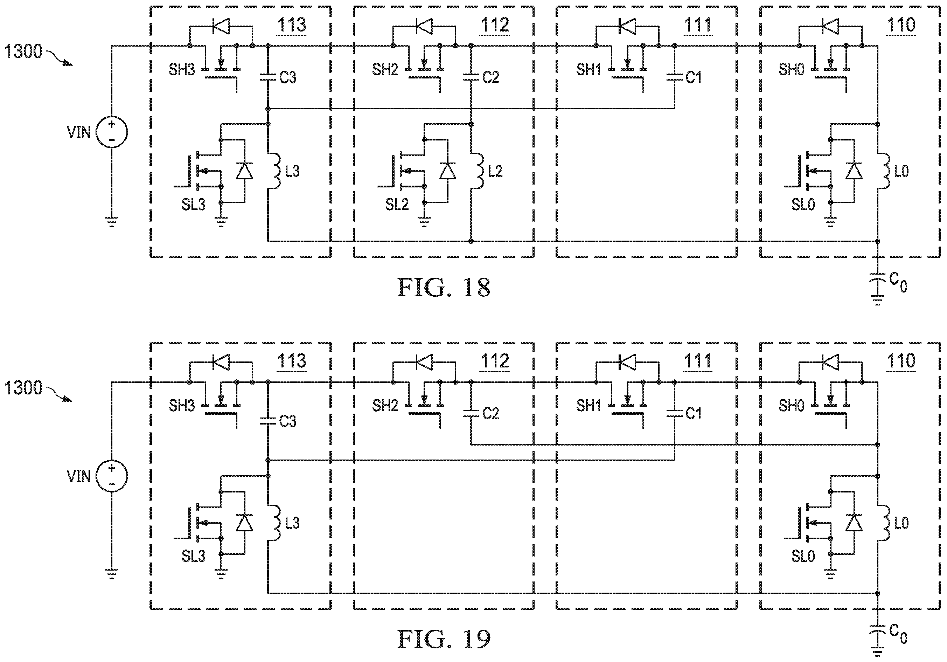

Figure 18 illustrates a schematic diagram of a second implementation of the four-cell hybrid power conversion system shown in Figure 16 in accordance with various embodiments of the present disclosure. Since the SCLS cell 113 and the SCLS cell 111 are configured to operate in a same operating phase, the low-side switches and the inductors of these two cells can be merged together. As shown in Figure 18, the SCLS cell 113 and the SCLS cell 111 share a same low-side switch SL3 and a same inductor L3.

Figure 19 illustrates a schematic diagram of a third implementation of the four-cell hybrid power conversion system shown in Figure 16 in accordance with various embodiments of the present disclosure. Since four cells are configured to operate in two operating phases, the low-side switches and the inductors of the two cells operating in the same phase can be merged together. As shown in Figure 19, the SCLS cell 113 and the SCLS cell 111 share a same low-side switch SL3 and a same inductor L3. The SCLS cell 112 and the SLS cell 110 share a same low-side switch SL0 and a same inductor L0.

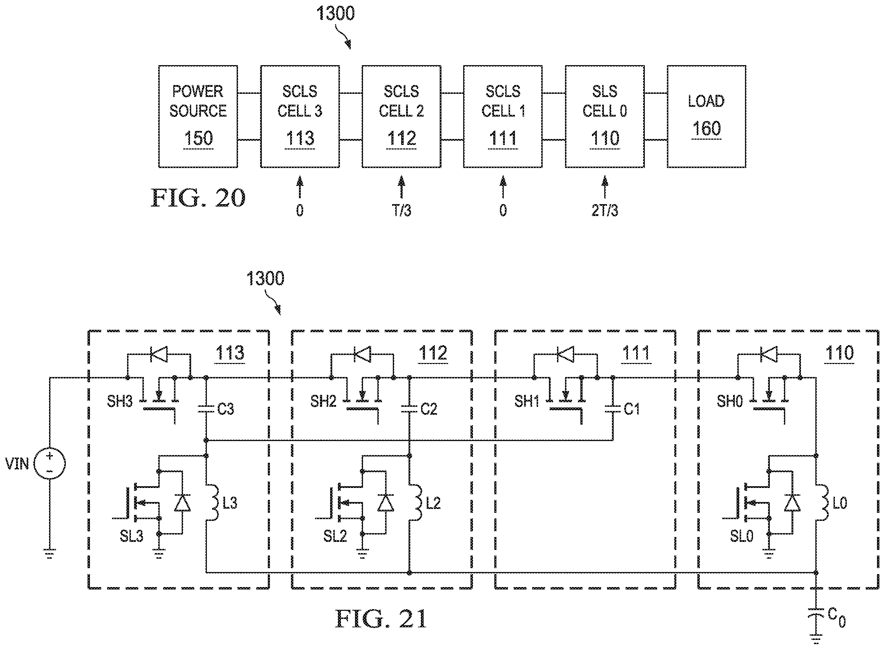

Figure 20 illustrates a third control scheme applied to the four-cell hybrid power conversion system shown in Figure 13 in accordance with various embodiments of the present disclosure. In some embodiments, the four-cell hybrid power conversion system 1300 is configured to operate in three different operating phases. In response to the three different operating phases, a switching cycle of the four-cell hybrid power conversion system 1300 is divided into three equal portions. The high-side switch of the SCLS cell 113 is turned on in a first portion ranging from 0 to T/3. The high-side switch of the SCLS cell 112 is turned on in a second portion ranging from T/3 to 2T/3. The high-side switch of the SCLS cell 111 is turned on in the first portion ranging from 0 to T/3. The high-side switch of the SLS cell 110 is turned on in a third portion ranging from 2T/3 to T.

In some embodiments, the SCLS cell 113 and the SCLS cell 111 may share a same low-side switch and a same inductor since these two cells are configured to operate in a same operating phase. The low-side switch and inductor sharing configuration will be described below with respect to Figure 21.

Figure 21 illustrates a schematic diagram of an implementation of the four-cell hybrid power conversion system shown in Figure 20 in accordance with various embodiments of the present disclosure. Since the SCLS cell 113 and the SCLS cell 111 are configured to operate in a same phase, the low-side switches and the inductors of these two cells can be merged together. As shown in Figure 21, the SCLS cell 113 and the SCLS cell 111 share a same low-side switch SL3 and a same inductor L3.

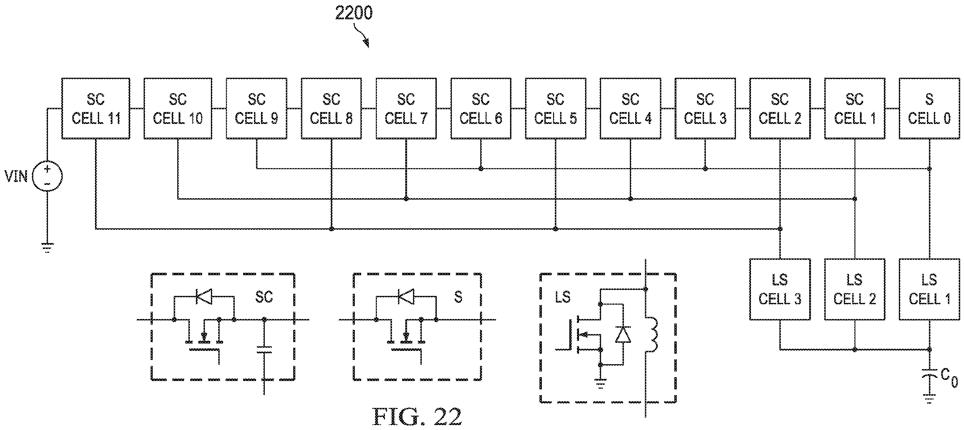

Figure 22 illustrates a block diagram of a 12-cell hybrid power conversion system in accordance with various embodiments of the present disclosure. The 12-cell hybrid power conversion system 2200 comprises eleven switch-capacitor (SC) cells, one switch (S) cell and three inductor-switch (LS) cells. Each SC cell comprises a high-side switch and a capacitor as shown in Figure 22. Each S cell comprises a high-side switch. Each LS cell comprises a low-side switch and an inductor as shown in Figure 22.

In some embodiments, the cells 0, 3, 6 and 9 are configured to operate in a same phase. As a result of having a same phase, the cells 0, 3, 6 and 9 share a same low-side switch and a same inductor. As shown in Figure 22, the outputs of the cells 0, 3, 6 and 9 are connected together and further connected to the LS cell 1. The LS cell 1 comprises the shared low-side switch and inductor for cells 0, 3, 6 and 9. Likewise, the cells 1, 4, 7 and 10 are configured to operate in a same phase. As a result of having a same phase, the cells 1, 4, 7 and 10 share a same low-side switch and a same inductor. As shown in Figure 22, the outputs of the cells 1, 4, 7 and 10 are connected together and further connected to the LS cell 2. The LS cell 2 comprises the shared low-side switch and inductor for cells 1, 4, 7 and 10. The cells 2, 5, 8 and 11 are configured to operate in a same phase. As a result of having a same phase, the cells 2, 5, 8 and 11 share a same low-side switch and a same inductor. As shown in Figure 22, the outputs of the cells 2, 5, 8 and 11 are connected together and further connected to the LS cell 3. The LS cell 3 comprises the shared low-side switch and inductor for cells 2, 5, 8 and 11.

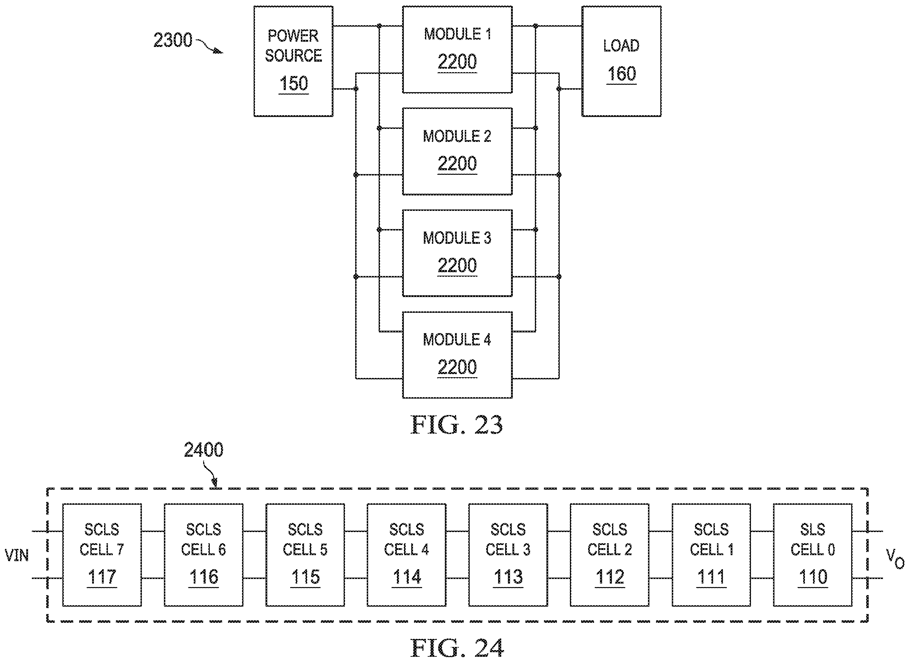

Figure 23 illustrates a block diagram of yet another hybrid power conversion system in accordance with various embodiments of the present disclosure. The hybrid power conversion system 2300 comprises four power modules connected in parallel between the power source 150 and the load 160. Each power module may be implemented as the hybrid power conversion system 2200 shown in Figure 22. Alternatively, each power module of Figure 23 may be implemented as any suitable hybrid power conversion circuits shown in the present disclosure.

The power conversion cells of each module of Figure 23 may be configured to operate in three different operating phases as described above with respect to Figure 22. There are four modules connected in parallel as shown in Figure 23. There is a phase shift between two adjacent modules. The different operating phases in each module and the phase shift between the adjacent modules help to achieve an interleaved operation, thereby reducing the input current ripple and the output current ripple.

Figure 24 illustrates a block diagram of an eight-cell hybrid power conversion system in accordance with various embodiments of the present disclosure. The eight-cell hybrid power conversion system 2400 is similar to the hybrid power conversion system 100 shown in Figure 1 except that the eight-cell hybrid power conversion system 2400 only has seven SCLS cells 111-117. The structure and the operating principle of the SCLS cell and SLS cell have been described above with respect to Figures 1-2, and hence are not discussed herein. Throughout the description, the cells 110, 112, 114, 116 are alternatively referred to as the even-numbered cells. The cells 111, 113, 115, 117 are alternatively referred to as the odd-numbered cells.

In some embodiments, each cell of the eight-cell hybrid power conversion system 2400 comprises a high-side switch and a low-side switch. The high-side switch and the low-side switch are controlled by complementary gate drive signals. The high-side switches of two adjacent cells cannot be turned on at the same time.

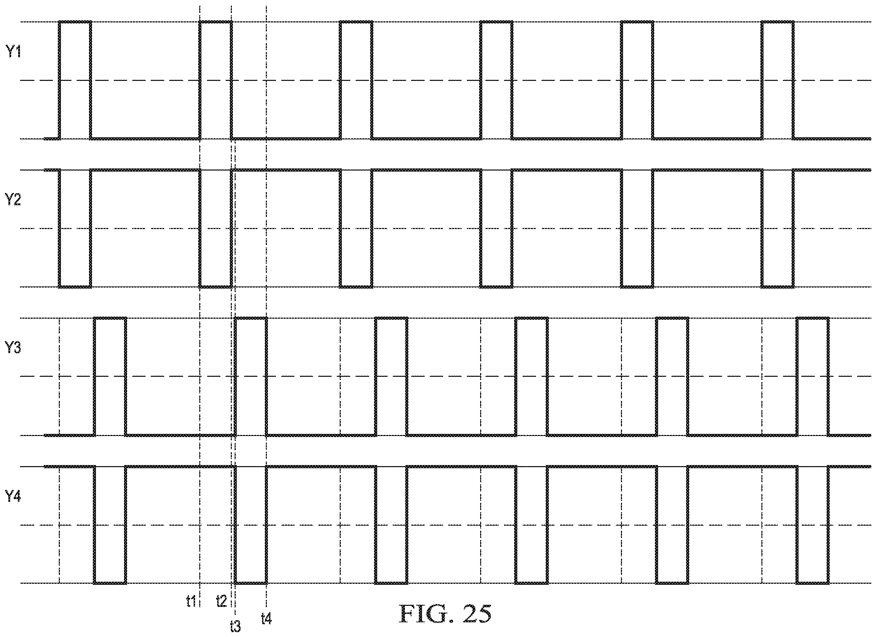

Figure 25 illustrates a timing diagram of a first implementation of the gate control scheme of the eight-cell hybrid power conversion system shown in Figure 24 in accordance with various embodiments of the present disclosure. The horizontal axis of Figure 25 represents intervals of time. There may be four vertical axes. The first vertical axis Y1 represents the gate drive signals of the high-side switches of the even-numbered cells. The second vertical axis Y2 represents the gate drive signals of the low-side switches of the even-numbered cells. The third vertical axis Y3 represents the gate drive signals of the high-side switches of the odd-numbered cells. The fourth vertical axis Y4 represents the gate drive signals of the low-side switches of the odd-numbered cells.

Referring back to Figure 24, the cells 110, 112, 114 and 116 are configured to operate in a same phase. The switches of the cells 110, 112, 114 and 116 are driven by the same gate drive signals. The cells 111, 113, 115 and 117 are configured to operate in a same phase. The switches of the cells 111, 113, 115 and 117 are driven by the same gate drive signals. A phase-shifted interleaved control mechanism is employed to generate the gate drive signals shown in Figure 25.

At time instant t1, the low-side switches of the cells 110, 112, 114 and 116 are turned off, and the high-side switches of the cells 110, 112, 114 and 116 are turned on as shown in Figure 25. It should be noted there may be a suitable delay (dead time) between the turn-off of the lowswitches and the turn-on of the high-side switches. The dead time helps to prevent shoot-through current from flowing through the switches.

At time instant t2, the high-side switches of the cells 110, 112, 114 and 116 are turned off, and the low-side switches of the cells 110, 112, 114 and 116 are turned on as indicated by the gate drive signals. It should be noted there may be a suitable delay between the turn-off of the high-switches and the turn-on of the low-side switches.

After a suitable time delay, at time instant t3, the high-side switches of the cells 111, 113, 115 and 117 are turned on. The low-side switches of the cells 111, 113, 115 and 117 are turned off as shown in Figure 25. At time instant t4, the high-side switches of the cells 111, 113, 115 and 117 are turned off and the low-side switches of the cells 111, 113, 115 and 117 are turned on as indicated by the gate drive signals. It should be noted during the turn-off/turn-on transitions, suitable delays are necessary to prevent shoot-through current from flowing through the switches.

As shown in Figure 25, the high-side switch and the low-side switch of each cell are driven by complementary gate drive signals. The cells shown in Figure 24 are configured to operate in two different operating phases. More particularly, two adjacent cells of Figure 24 are configured to operate in two different operating phases. The maximum duty cycle of each cell is about 50%.

It should be noted the timing diagram shown in Figure 25 is merely an example, which should not unduly limit the scope of the claims. One of ordinary skill in the art would recognize many variations, alternatives, and modifications. For example, the time delay between the turn-off of the high-side switches of the even-numbered cells and the turn-on of the high-side switches of the odd-numbered cells may vary depending on different applications and design needs.

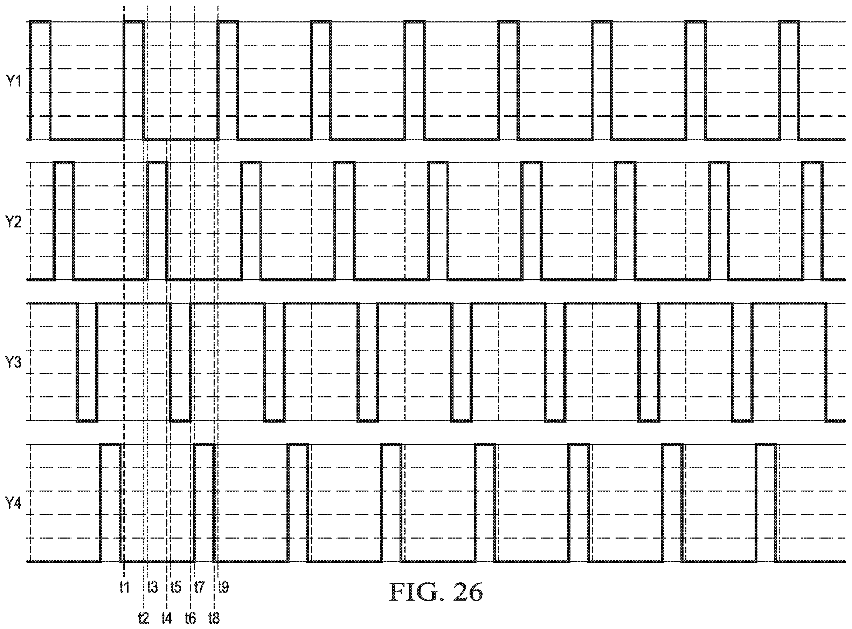

Figure 26 illustrates a timing diagram of a second implementation of the gate control scheme of the eight-cell hybrid power conversion system shown in Figure 24 in accordance with various embodiments of the present disclosure. The horizontal axis of Figure 26 represents intervals of time. There may be four vertical axes. The first vertical axis Y1 represents the gate drive signals of the high-side switches of the cells 110 and 114. The second vertical axis Y2 represents the gate drive signals of the high-side switches of the cells 111 and 115. The third vertical axis Y3 represents the gate drive signals of the high-side switches of the cells 112 and 116. The fourth vertical axis Y4 represents the gate drive signals of the high-side switches of the cells 113 and 117.

Referring back to Figure 24, the cells are configured to operate in four different operating phases. In particular, the cells 110 and 114 are configured to operate in a first operating phase. The switches of the cells 110 and 114 are driven by the same gate drive signals. The cells 111 and 115 are configured to operate in a second operating phase. The switches of the cells 111 and 115 are driven by the same gate drive signals. The cells 112 and 116 are configured to operate in a third operating phase. The switches of the cells 112 and 116 are driven by the same gate drive signals. The cells 113 and 117 are configured to operate in a fourth operating phase. The switches of the cells 113 and 117 are driven by the same gate drive signals.

A perfect-interleaved control mechanism is employed to generate the gate drive signals shown in Figure 26. A switching cycle is from t1 to t9. At time instant t1, the high-side switches of the cells 110 and 114 are turned on. The high-side switches of the cells 111-113 and 115-117 remain off as shown in Figure 26. At time instant t2, the high-side switches of the cells 110 and 114 are turned off. After a suitable first time delay, at time instant t3, the high-side switches of the cells 111 and 115 are turned on. At time instant t4, the high-side switches of the cells 111 and 115 are turned off. After a suitable second time delay, at time instant t5, the high-side switches of the cells 112 and 116 are turned on. At time instant t6, the high-side switches of the cells 112 and 116 are turned off. After a suitable third time delay, at time instant t3, the high-side switches of the cells 113 and 117 are turned on. At time instant t8, the high-side switches of the cells 113 and 117 are turned off. After a suitable third fourth delay, at time instant t9, the high-side switches of the cells 110 and 114 are turned on. The eight-cell hybrid power conversion system enters into a new switching cycle.

It should be noted that the high-side switch and the low-side switch of each cell are driven by complementary gate drive signals. The cells shown in Figure 24 are configured to operate in four different operating phases. The maximum duty cycle of each cell is about 25%.

It should be noted the timing diagram shown in Figure 26 is merely an example, which should not unduly limit the scope of the claims. One of ordinary skill in the art would recognize many variations, alternatives, and modifications. For example, the cells of Figure 24 may be configured to operate in M different operating phases. M is a predetermined integer. M may vary depending on different applications and design needs. Furthermore, each operating phase may comprise one cell in some embodiments. Alternatively, each operating phase may comprise multiple cells.

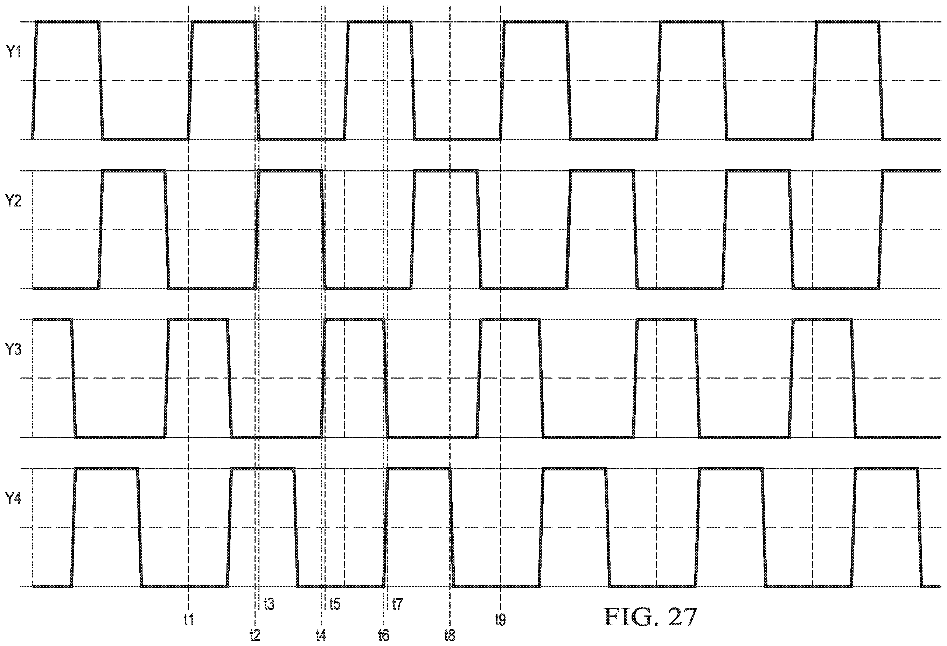

Figure 27 illustrates a timing diagram of a third implementation of the gate control scheme of the eight-cell hybrid power conversion system shown in Figure 24 in accordance with various embodiments of the present disclosure. The horizontal axis of Figure 27 represents intervals of time. There may be four vertical axes. The first vertical axis Y1 represents the gate drive signals of the high-side switches of the cells 110 and 114. The second vertical axis Y2 represents the gate drive signals of the high-side switches of the cells 111 and 115. The third vertical axis Y3 represents the gate drive signals of the high-side switches of the cells 112 and 116. The fourth vertical axis Y4 represents the gate drive signals of the high-side switches of the cells 113 and 117.

Referring back to Figure 24, the cells are configured to operate in four different operating phases. In particular, the cells 110 and 114 are configured to operate in a first operating phase. The switches of the cells 110 and 114 are driven by the same gate drive signals. The cells 111 and 115 are configured to operate in a second operating phase. The switches of the cells 111 and 115 are driven by the same gate drive signals. The cells 112 and 116 are configured to operate in a third operating phase. The switches of the cells 112 and 116 are driven by the same gate drive signals. The cells 113 and 117 are configured to operate in a fourth operating phase. The switches of the cells 113 and 117 are driven by the same gate drive signals.

A cascaded-interleaved control mechanism is employed to generate the gate drive signals shown in Figure 27. The time from t1 to t9 represents two switching cycles. At time instant t1, the high-side switches of the cells 110 and 114 are turned on. At time instant t2, the high-side switches of the cells 110 and 114 are turned off. During the time period from t1 to t2, the high-side switches of the adjacent cells 111 and 115 remain off as shown in Figure 27. The high-side switches of the cells 112-113 and 116-117 may be turned on as shown in Figure 27.

After the high-side switches of the cells 110 and 114 have been turned off, at time instant t3, the high-side switches of the cells 111 and 115 are turned on. It should be noted that there is a time delay between t2 and t3. At time instant t4, the high-side switches of the cells 111 and 115 are turned off. After another time delay, at time instant t5, the high-side switches of the cells 112 and 116 are turned on. At time instant t6, the high-side switches of the cells 112 and 116 are turned off. After yet another time delay, at time instant t7, the high-side switches of the cells 113 and 117 are turned on. At time instant t8, the high-side switches of the cells 113 and 117 are turned off. After yet another time delay, at time instant t9, the high-side switches of the cells 110 and 114 are turned on.

It should be noted that the high-side switch and the low-side switch of each cell are driven by complementary gate drive signals. The cells shown in Figure 24 are configured to operate in four different operating phases. The maximum duty cycle of each cell is about 50%.

It should be noted the timing diagram shown in Figure 27 is merely an example, which should not unduly limit the scope of the claims. One of ordinary skill in the art would recognize many variations, alternatives, and modifications. For example, the cells of Figure 24 may be configured to operate in M different operating phases. M is a predetermined integer. M may vary depending on different applications and design needs. Furthermore, each operating phase may have one cell in some embodiments. Alternatively, each operating phase may comprise multiple cells.

Figures 25-27 show three different operating modes. A first operating mode shown in Figure 25 is carried out under a phase-shifted interleaved control mechanism. A second operating mode shown in Figure 26 is carried out under a perfect interleaved control mechanism. A third operating mode shown in Figure 27 is carried out under a cascaded interleaved control mechanism.

In some embodiments, a hybrid power conversion system comprises N power conversion cells configured to operate in M operating phases. M is less than or equal to N, and M is greater than or equal to 2. Two adjacent power conversion cells of the N power conversion cells to operate in two different operating phases.

In some embodiments, if the hybrid power conversion system operates in the first operating mode (phase-shifted interleaved control mechanism), the maximum duty cycle of each cell of the N power conversion cells is 50% (1/2). In the first operating mode, odd-numbered power conversion cells of the N power conversion cells operate in a first operating phase, and even-numbered power conversion cells of the N power conversion cells operate in a second operating phase. M is equal to 2.

In some embodiments, if the hybrid power conversion system operates in the second operating mode (perfect interleaved control mechanism), the maximum duty cycle of each cell of the N power conversion cells is 1/M. For example, as shown in Figure 26, the hybrid power conversion system operates in four different phases (M=4). As a result, the maximum duty cycle of each cell of the N power conversion cells is 25% (1/4).

In some embodiments, if the hybrid power conversion system operates in the third operating mode (cascaded interleaved control mechanism), the maximum duty cycle of each cell of the N power conversion cells is 50% (1/2). For example, as shown in Figure 27, the hybrid power conversion system operates in four different phases (M=4). The maximum duty cycle of each cell of the N power conversion cells is 50%.

In normal operation, the N power conversion cells of the hybrid power conversion system are configured to operate in the second operating mode (perfect interleaved control mechanism) for minimizing output ripple. During a load transient, the N power conversion cells of the hybrid power conversion system are configured to leave the second operating mode (perfect interleaved control mechanism) and enter into either the first operating mode (phase-shifted interleaved control mechanism) or the third operating mode (cascaded interleaved control mechanism) for improving load transient response.

Furthermore, during the load transient, a short circuit may be applied to one power conversion cell of the N power conversion cells for improving load transient response. Moreover, during the load transient, the number of the operating phases may be dynamically adjusted to improve load transient response.

Figure 28 illustrates a block diagram of the inventive hybrid buck-boost power conversion system in accordance with claim 1. The hybrid buck-boost power conversion system 2800 comprises a plurality of buck-boost cells 2810, 2811, 2812 and 2813 connected in cascade between the power source 150 and the load 160. Each buck-boost cell comprises a buck converter cell (*e.g.,* cells 110, 111, 112 and 113) and a boost converter cell (*e.g.,* cells 1101, 1111, 1121 and 1131). The buck converter cells are (N-1) SCLS cells and one SLS cell as shown in Figure 28. The structures and operating principles of the SCLS cell and the SLS cell have been described above with respect to Figures 1-2, and hence are not discussed again herein. The boost converter cell (*e.g.,* cell 1101) comprises two switches. Each buck converter cell (*e.g.,* cell 111) and its corresponding boost converter cell (*e.g.,* cell 1101) form a buck-boost power converter.

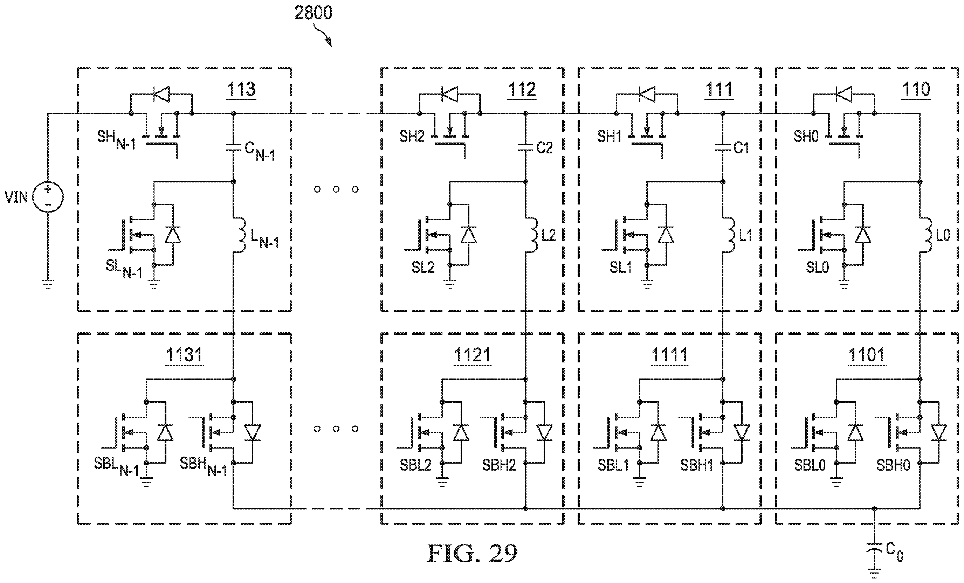

Figure 29 illustrates a schematic diagram of the hybrid buck-boost power conversion system shown in Figure 28. As shown in Figure 29, each boost converter cell (*e.g.,* cell 1101) comprises two switches. A first switch (*e.g*., switch SBH0) is connected between the output of the buck converter cell and the output capacitor Co of the hybrid buck-boost power conversion system 2800. A second switch (*e.g.,* switch SBL0) is connected between the output of the buck converter cell and ground. As shown in Figure 29, the buck converter cell (*e.g.,* cell 110) and the boost converter cell (*e.g.,* cell 1101) form a four-switch buck-boost converter.

It should be noted that the schematic diagram described above is merely an exemplary implementation and is not meant to limit the current embodiments. One of ordinary skill in the art would recognize many variations, alternatives, and modifications. For example, the switch (*e.g.,* switch SBH1) of the boost converter cell may be replaced by a diode.

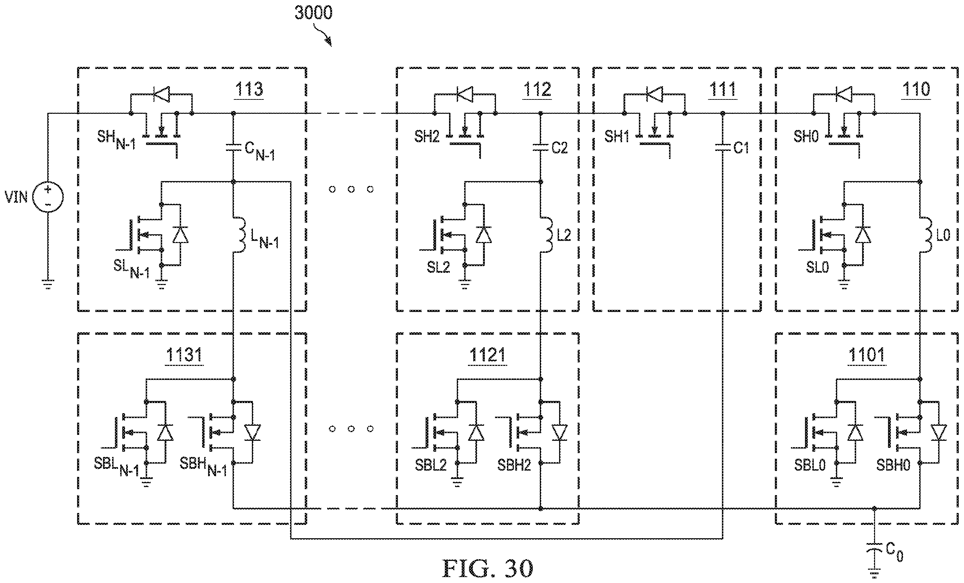

Figure 30 illustrates a schematic diagram of a reduced-phase hybrid buck-boost power conversion system in accordance with various embodiments of the present disclosure. The reduced-phase hybrid buck-boost power conversion system 3000 shown in Figure 30 is similar to the hybrid buck-boost power conversion system 2800 shown in Figure 29 except that at least two cells share a low-side switch, an inductor and a boost converter cell. As shown in Figure 30, the reduced-phase hybrid buck-boost power conversion system 3000 comprises N power conversion cells. In some embodiments, power conversion cells 111 and 113 are configured to operate in a same operating phase. These two power conversion cells can share a low-side switch, an inductor and a boost converter cell. As shown in Figure 30, the capacitor C1 of the power conversion cell 111 is connected to the common node of the switch SL_{N-1} and the inductor L_{N-1}.

It should be noted that the reduced phase operation used in Figure 30 is selected purely for demonstration purposes and are not intended to limit the various embodiments of the present disclosure to any particular reduced-phase configurations. One of ordinary skill in the art would recognize many variations, alternatives, and modifications. For example, more than two power conversion cells can share a low-side switch, an inductor and a boost converter cell if these power conversion cells operate in a same operating phase.

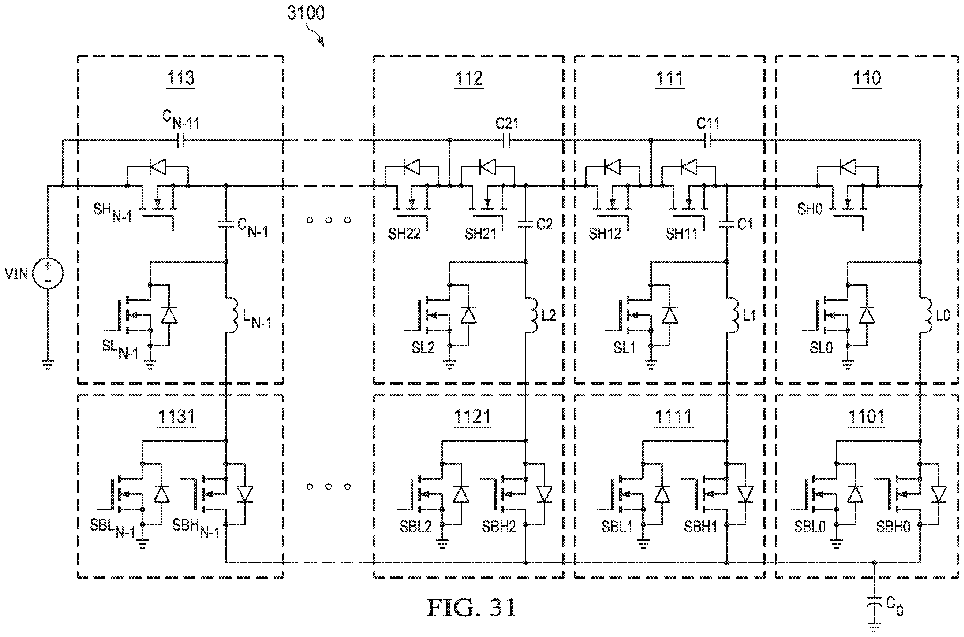

Figure 31 illustrates a schematic diagram of another hybrid buck-boost power conversion system in accordance with various embodiments of the present disclosure. The hybrid buck-boost power conversion system 3100 shown in Figure 31 is similar to the hybrid buck-boost power conversion system 2800 shown in Figure 29 except that the voltage stress of the high-side switches has been reduced through employing additional high-side switches and capacitors. As shown in Figure 31, the SLS cell 110 comprises two switches and one inductor. The SCLS cells 111 and 112 comprise one additional switch and one additional capacitor. For example, the SCLS cell 111 comprises high-side switches SH11, SH12, capacitors C1, C11, low-side switch SL1 and an inductor L1. The additional high-side switch SH12 and the additional capacitor C11 help to achieve a same voltage stress across all high-side switches of the SCLS cells. In particular, the high-side switches of the SCLS cells are of a voltage stress of VIN/N.

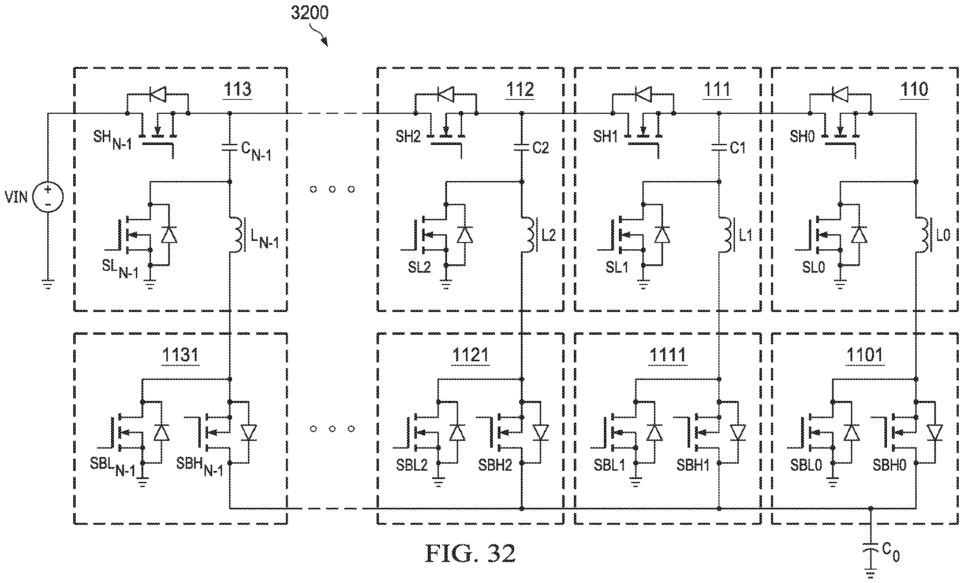

Figure 32 illustrates a schematic diagram of another hybrid buck-boost power conversion system in accordance with various embodiments of the present disclosure. The hybrid buck-boost power conversion system 3200 shown in Figure 32 is similar to the hybrid buck-boost power conversion system 2800 shown in Figure 29 except that the inductors of the plurality of power conversion cells are magnetically coupled to each other. As shown in Figure 32, the inductors L0, L1, L2 and L_{N-1} are magnetically coupled to each other.

It should be noted that the magnetic coupling used in Figure 32 is selected purely for demonstration purposes and are not intended to limit the various embodiments of the present disclosure to any particular reduced-phase configurations. One of ordinary skill in the art would recognize many variations, alternatives, and modifications. For example, it is not necessary to have all inductors magnetically coupled to each other. In some embodiments, only a predetermined number of inductors are magnetically coupled to each other.

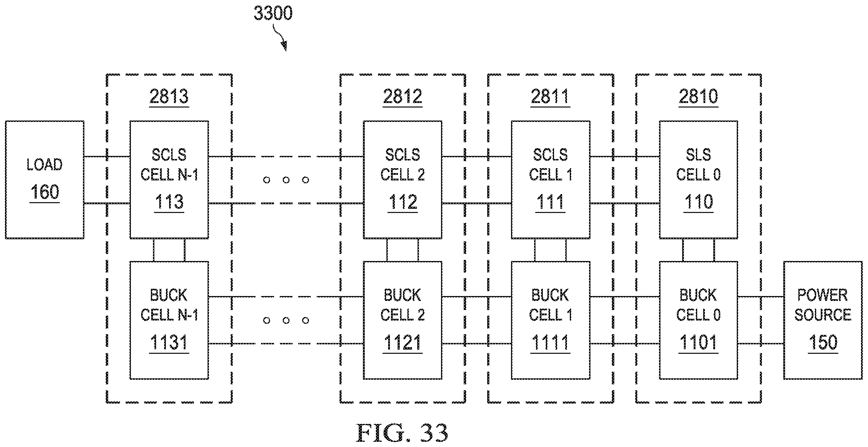

Figure 33 illustrates a block diagram of an alternative inventive hybrid buck-boost power conversion system in accordance with claim 9. The hybrid buck-boost power conversion system 3300 is similar to the hybrid buck-boost power conversion system 2800 shown in Figure 28 except that the power source 150 and the load 160 are swapped. As shown in Figure 33, the load 160 is connected to the SCLS cell 113. The power source 150 is connected to the buck converter cell 1101. After swapping the power source 150 and the load 160, the cells 1101, 1111, 1121 and 1131 function as buck converter cells. The cells 110, 111, 112 and 113 function as boost converter cells.

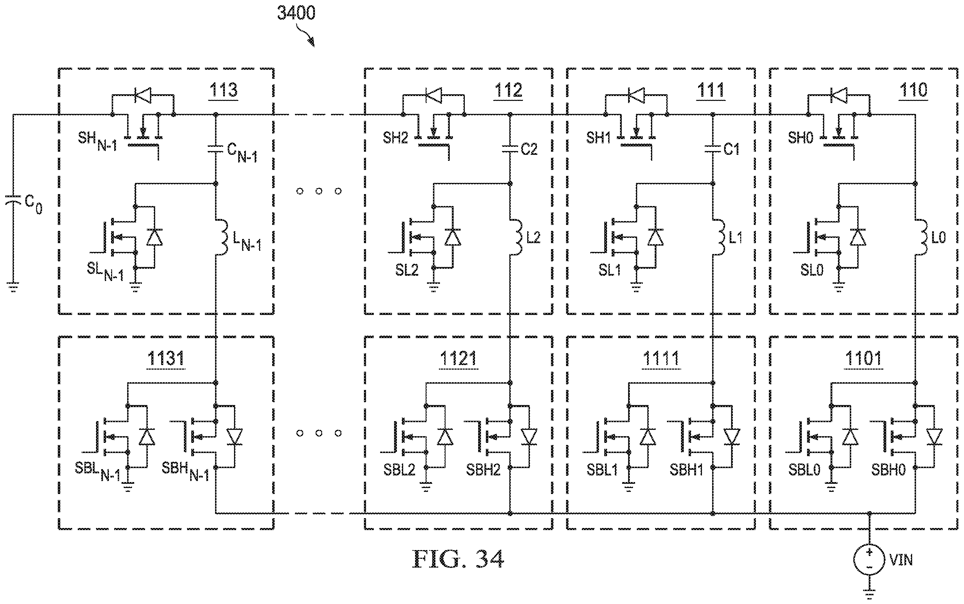

Figure 34 illustrates a schematic diagram of the hybrid buck-boost power conversion system shown in Figure 33. The schematic diagram of the hybrid buck-boost power conversion system 3400 is similar to that of the hybrid buck-boost power conversion system 2800 shown in Figure 29 except that each upper cell (*e.g.,* cells 110, 111, 112 and 113) is configured to operate as a boost converter cell, and each lower cell (*e.g.,* cells 1101, 1111, 1121 and 1131) is configured to operate as a buck converter cell.

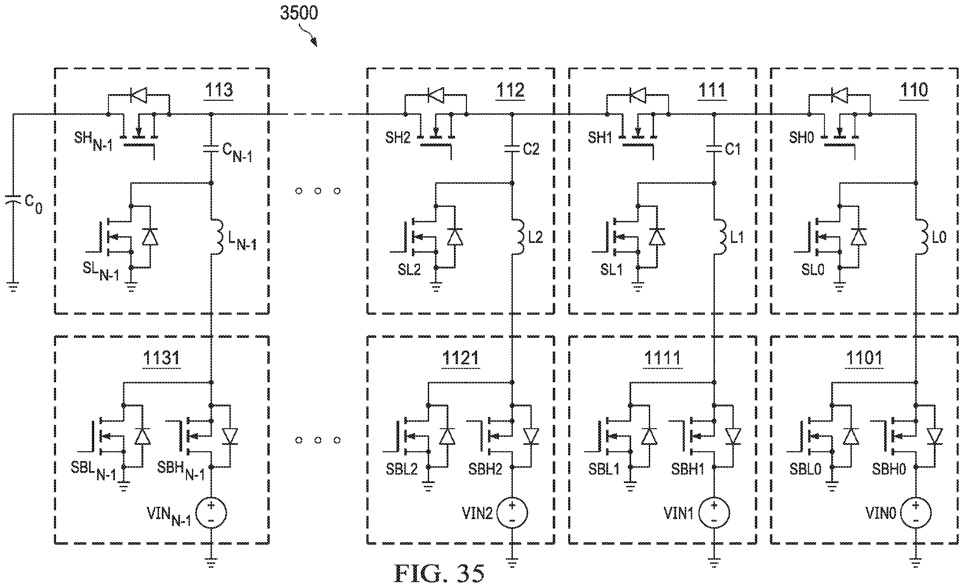

Figure 35 illustrates a schematic diagram of another hybrid buck-boost power conversion system in accordance with various embodiments of the present disclosure. The schematic diagram of the hybrid buck-boost power conversion system 3500 is similar to that of the hybrid buck-boost power conversion system 3400 shown in Figure 34 except that the power source has been split into a plurality of power sources VINO, VIN1, VIN2 and VIN_{N-1}. Each buck-boost power conversion cell (*e.g.,* buck-boost power conversion cell 110/1101) has a dedicated input power source.

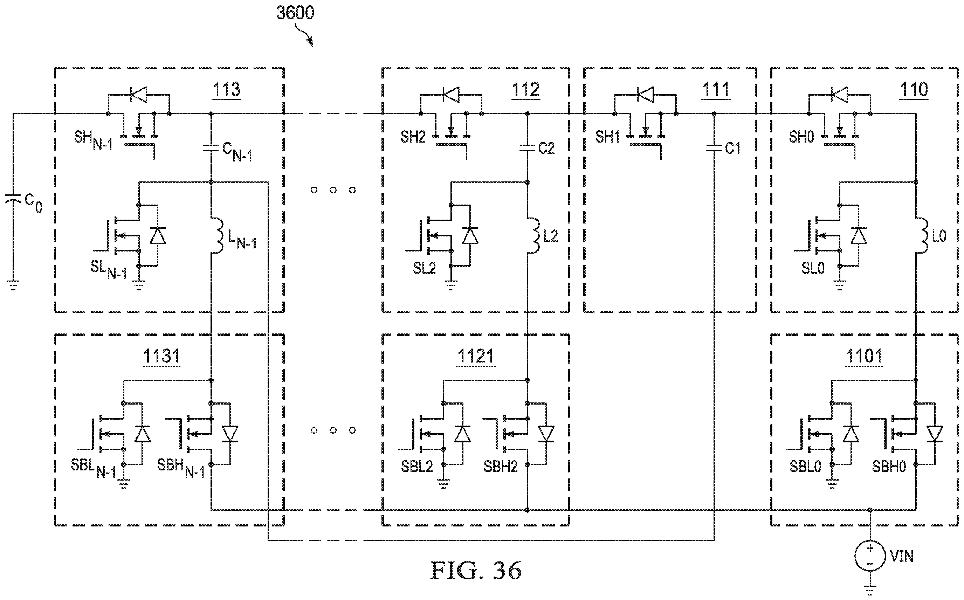

Figure 36 illustrates a schematic diagram of a reduced-phase hybrid buck-boost power conversion system in accordance with various embodiments of the present disclosure. The reduced-phase hybrid buck-boost power conversion system 3600 shown in Figure 36 is similar to the hybrid buck-boost power conversion system 3400 shown in Figure 34 except that at least two cells share a low-side switch, a corresponding inductor and a buck converter cell. As shown in Figure 36, the reduced-phase hybrid buck-boost power conversion system 3600 comprises N power conversion cells. In some embodiments, power conversion cells 111 and 113 operate in a same operating phase. These two power conversion cells can share a low-side switch, an inductor and a buck converter cell (*e.g.,* buck converter cell 1131). As shown in Figure 36, the capacitor C1 of the power conversion cell 111 is connected to the common node of the switch SL_{N-1} and the inductor L_{N-1}.

It should be noted that the reduced phase operation used in Figure 36 is selected purely for demonstration purposes and are not intended to limit the various embodiments of the present disclosure to any particular reduced-phase configurations. One of ordinary skill in the art would recognize many variations, alternatives, and modifications. For example, more than two power conversion cells can share the low-side switch, the inductor and the boost converter cell if these power conversion cells operate in a same operating phase.

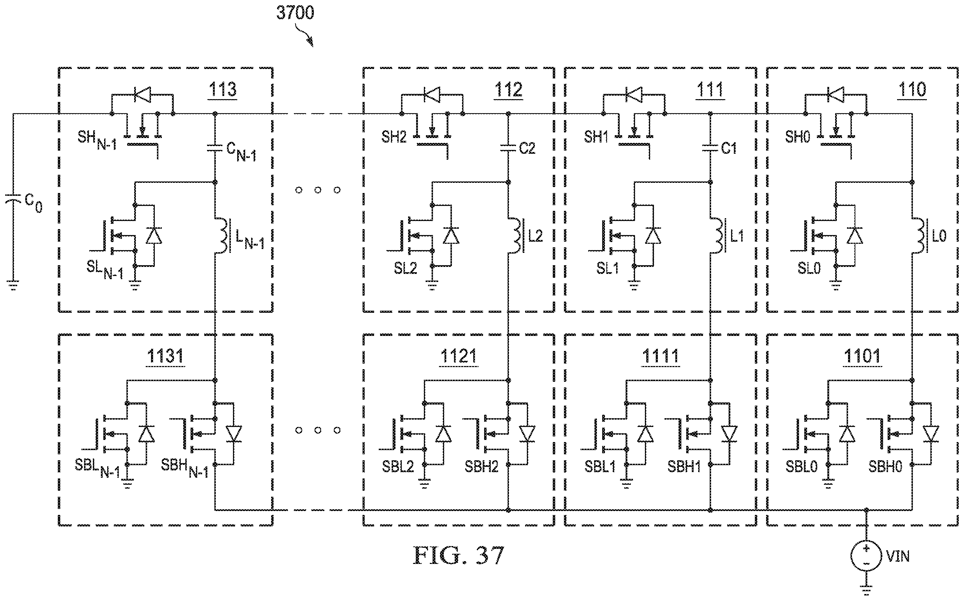

Figure 37 illustrates a schematic diagram of another hybrid buck-boost power conversion system in accordance with various embodiments of the present disclosure. The hybrid buck-boost power conversion system 3700 shown in Figure 37 is similar to the hybrid buck-boost power conversion system 3400 shown in Figure 34 except that the inductors of the plurality of power conversion cells are magnetically coupled to each other. As shown in Figure 37, the inductors L0, L1, L2 and L_{N-1} are magnetically coupled to each other.

It should be noted that the magnetic coupling used in Figure 37 is selected purely for demonstration purposes and are not intended to limit the various embodiments of the present disclosure to any particular magnetic coupling configurations. One of ordinary skill in the art would recognize many variations, alternatives, and modifications. For example, it is not necessary to have all inductors magnetically coupled to each other. In some embodiments, only a predetermined number of inductors are magnetically coupled to each other.

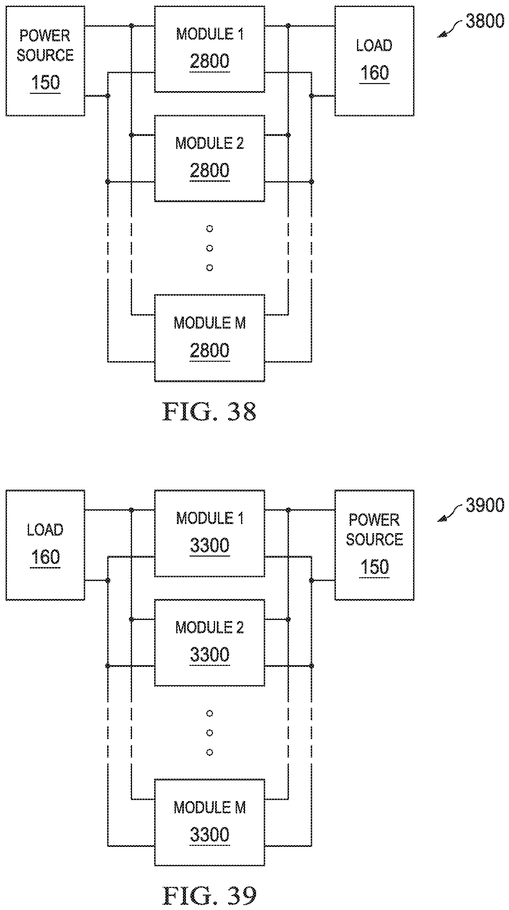

Figure 38 illustrates a block diagram of yet another hybrid buck-boost power conversion system in accordance with various embodiments of the present disclosure. The hybrid buck-boost power conversion system 3800 comprises a plurality of power modules connected in parallel between the power source 150 and the load 160. Each power module may be implemented as the hybrid buck-boost power conversion system 2800 shown in Figure 28. Alternatively, each power module of Figure 38 may be implemented as any suitable power conversion circuits shown in the present disclosure.

The power conversion cells of each module of Figure 38 may be configured to operate in K operating phases. K is a predetermined integer. There are M modules connected in parallel as shown in Figure 38. There is a phase shift between two adjacent modules. The operating phases in each module and the phase shift between the adjacent modules help to achieve an interleaved operation, thereby reducing the input current ripple and the output current ripple. The frequency of the current ripple is equal to K·M·fs, where fs is the switching frequency of the hybrid buck-boost power conversion system 3800.

Figure 39 illustrates a block diagram of yet another hybrid buck-boost power conversion system in accordance with various embodiments of the present disclosure. The hybrid buck-boost power conversion system 3900 comprises a plurality of power modules connected in parallel between the power source 150 and the load 160. Each power module may be implemented as the hybrid buck-boost power conversion system 3300 shown in Figure 33. Alternatively, each power module of Figure 39 may be implemented as any suitable power conversion circuits shown in the present disclosure.

The power conversion cells of each module of Figure 38 may be configured to operate in K operating phases. K is a predetermined integer. There are M modules shown in Figure 39. There is a phase shift between two adjacent modules. The operating phases in each module and the phase shift between adjacent modules help to achieve an interleaved operation, thereby reducing the input current ripple and the output current ripple. The frequency of the current ripple is equal to K·M·fs, where fs is the switching frequency of the hybrid buck-boost power conversion system 3900.

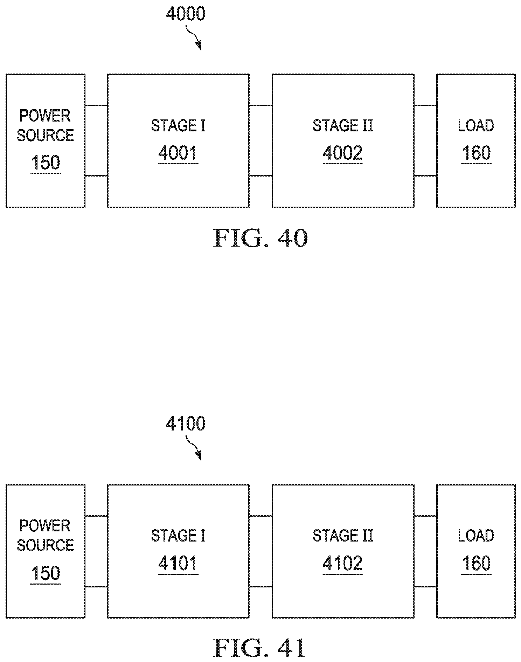

Figure 40 illustrates a block diagram of a two-stage power conversion system in accordance with various embodiments of the present disclosure. The two-stage power conversion system 4000 comprises a first power conversion stage 4001 and a second power conversion stage 4002 connected in cascade between a power source 150 and a load 160. In some embodiments, the first power conversion stage 4001 is implemented as a hybrid power conversion system having a fixed duty cycle (open loop). The hybrid power conversion system of the first power conversion stage 4001 may be any hybrid power conversion systems described above.

The second power conversion stage 4002 is implemented as a hybrid power conversion system having an adjustable duty cycle. The hybrid power conversion system of the second power conversion stage 4002 may be any hybrid power conversion systems described above. The output voltage of the first power conversion stage 4001 is higher than the output voltage of the second power conversion stage 4002. The two-stage power conversion system 4000 can achieve high efficiency in high step-down voltage ratio and high power applications.

Figure 41 illustrates a block diagram of another two-stage power conversion system in accordance with various embodiments of the present disclosure. The two-stage power conversion system 4100 comprises a first power conversion stage 4101 and a second power conversion stage 4102 connected in cascade between a power source 150 and a load 160. In some embodiments, the first power conversion stage 4101 is implemented as a hybrid power conversion system having an adjustable duty cycle. The hybrid power conversion system of the first power conversion stage 4101 may be any hybrid power conversion systems described above.

The second power conversion stage 4102 is implemented as a hybrid power conversion system having a fixed duty cycle (open loop). The hybrid power conversion system of the second power conversion stage 4102 may be any hybrid power conversion systems described above. The output voltage of the two-stage power conversion system 4100 can be regulated through adjusting the duty cycle of the first power conversion stage 4101. The two-stage power conversion system 4100 can achieve high efficiency in high step-down voltage ratio and high power applications. The invention is defined by the appended claims. Further variations and modifications are possible within the scope of these claims.

## Claims

1. A hybrid buck-boost power conversion system (2800), comprising a plurality of buck-boost cells (2810-2813) connected in cascade between a power source (150) and a load (160), the buck-boost cells (2810-2813) comprising:
N buck conversion cells (110-113) configured to operate in M operating phases, wherein N and M are predetermined integers, and wherein M is less than or equal to N, and M is greater than or equal to 2;
two adjacent buck conversion cells of the N buck conversion cells (110-113) being configured to operate in two different operating phases, wherein a maximum duty cycle of each buck conversion cell is in a range from 1/M to 1/2;
wherein the N buck conversion cells (110-113) comprise a first buck conversion cell (110) and a second buck conversion cell (111, 112, 113);
wherein the first buck conversion cell (110) is a switch-inductor-switch (SLS) cell comprising a first switch (SH0), a second switch (SLO) and a first inductor (L0), and wherein:
the first switch (SH0) and the second switch (SLO) are connected in series between an input terminal (C1IN) of the first buck conversion cell (110) and ground; and
the first inductor (L0) is connected at its one end to a common node of the first switch (SH0) and the second switch (SL0);
wherein each of the other N-1 second buck conversion cells (111, 112, 113) is a switch-capacitor-inductor-switch (SCLS) cell comprising a third switch (SH1), a capacitor (C1), a fourth switch (SL1) and a second inductor (L1), and wherein:
the third switch (SH1), the capacitor (C1) and the fourth switch (SL1) are connected in series between an input terminal (C2IN) of the second buck conversion cell (111) and ground; and
the second inductor (L1) is connected at its one end to a common node of the capacitor (C1) and the fourth switch (SL1), and wherein:
the input terminal (C1IN) of the first buck conversion cell (110) is connected to a common node of the third switch (SH1) and the capacitor (C1);
the buck-boost cells (2810-2813) further comprising a first and a second boost conversion cell (1101-1131), the first buck conversion cell (110) and the first boost conversion cell (1101) forming a first buck-boost cell (2810), and each second buck conversion cell (111, 112, 113) and its corresponding second boost conversion cell (1111, 1121, 1131) forming a second buck-boost cell (2811, 2812, 2813);
wherein the first boost conversion cell (1101) comprises two switches, a first switch (SBH0) being connected between the other end of the first inductor (L0) of the first buck conversion cell (110) and an output capacitor (C0) of the hybrid buck-boost power conversion system, and the second switch (SBL0) being connected between the other end of the first inductor (L0) of the first buck conversion cell (110) and ground; and
wherein the second boost conversion cell (1111) also comprises two switches, a first switch (SBH1) being connected between the other end of the second inductor (L1) of the second buck conversion cell (111) and the output capacitor (C0) of the hybrid buck-boost power conversion system, and the second switch (SBL1) being connected between the other end of the second inductor (L1) of the second buck conversion cell (111) and ground.

2. The system of claim 1, wherein:
the N power conversion cells (110-113) are configured to operate in a first interleaved control mode, wherein the N power conversion cells (110-113) are configured to operate in N different operating phases, and wherein each power conversion cell of the N power conversion cells has a maximum duty cycle of 1/N; and
wherein the N power conversion cells (110-113) are configured to operate in a second interleaved control mode, wherein the N power conversion cells (110-113) operate in N different operating phases, and wherein each power conversion cell of the N power conversion cells (110-113) has a maximum duty cycle of 1/2.

3. The system of any one of claims 1-2, wherein;
the N power conversion cells (110-113) are configured to operate in normal operation in the first interleaved control mode for minimizing output ripple; and
the N power conversion cells (110-113) are configured to leave the first interleaved control mode and enter into the second interleaved control mode for improving load transient response during a load transient.

4. The system of any one of claims 2-3, wherein:
the first interleaved control mode is carried out under a perfect interleaved control mechanism; and
the second interleaved control mode is carried out under a cascaded interleaved control mechanism.

5. The system of any one of claims 1-2, wherein:
the N power conversion cells (110-113) are configured to operate in a third interleaved control mode, wherein the N power conversion cells are configured to operate in two different operating phases, and wherein each power conversion cell of the N power conversion cells (110-113) has a maximum duty cycle of 1/2.

6. The system of any one of claims 1-5, wherein:
the N power conversion cells (110-113) are configured to operate in normal operation in the first interleaved control mode for minimizing output ripple; and
the N power conversion cells (110-113) are configured to leave the first interleaved control mode and enter into the third interleaved control mode for improving load transient response during a load transient.

7. The system of any one of claims 5-6, wherein:
the first interleaved control mode is carried out under a perfect interleaved control mechanism; and
the third interleaved control mode is carried out under a phase-shifted interleaved control mechanism.

8. The system of any one of claims 5-7, wherein:
under phase-shifted interleaved control mechanism, odd-numbered power conversion cells of the N power conversion cells are configured to operate in a first operating phase, and even-numbered power conversion cells of the N power conversion cells are configured to operate in a second operating phase.

9. A hybrid buck-boost power conversion system (3300, 3400), comprising a plurality of buck-boost cells (2810-2813) connected in cascade between a load (160) and a power source (150), the buck-boost cells (2810-2813) comprising:
N boost conversion cells (110-113) configured to operate in M operating phases, wherein N and M are predetermined integers, and wherein M is less than or equal to N, and M is greater than or equal to 2;
two adjacent boost conversion cells of the N buck conversion cells (110-113) being configured to operate in two different operating phases, wherein a maximum duty cycle of each boost conversion cell is in a range from 11M to 1/2;
wherein the N boost conversion cells (110-113) comprise a first boost conversion cell (110) and a second boost conversion cell (111, 112, 113);
wherein the first boost conversion cell (110) is a switch-inductor-switch (SLS) cell comprising a first switch (SH0), a second switch (SLO) and a first inductor (L0), and wherein:
the first switch (SH0) and the second switch (SLO) are connected in series between an input terminal (C1IN) of the first boost conversion cell (110) and ground; and
the first inductor (L0) is connected at its one end to a common node of the first switch (SH0) and the second switch (SL0);
wherein each of the other N-1 second boost conversion cells (111, 112, 113) is a switch-capacitor-inductor-switch (SCLS) cell comprising a third switch (SH1), a capacitor (C1), a fourth switch (SL1) and a second inductor (L1), and wherein:
the third switch (SH1), the capacitor (C1) and the fourth switch (SL1) are connected in series between an input terminal (C2IN) of the second boost conversion cell (111) and ground; and
the second inductor (L1) is connected at its one end to a common node of the capacitor (C1) and the fourth switch (SL1), and wherein:
the input terminal (C1IN) of the first boost conversion cell (110) is connected to a common node of the third switch (SH1) and the capacitor (C1);
the buck-boost cells (2810-2813) further comprising a first and a second buck conversion cell (1101-1131), the first boost conversion cell (110) and the first buck conversion cell (1101) forming a first buck-boost cell (2810), and each second boost conversion cell (111, 112, 113) and its corresponding second buck conversion cell (1111, 1121, 1131) forming a second buck-boost cell (2811, 2812, 2813);
wherein the first buck conversion cell (1101) comprises two switches, a first switch (SBH0) being connected between the other end of the first inductor (L0) of the first boost conversion cell (110) and the power source (VIN) of the hybrid buck-boost power conversion system, and the second switch (SBL0) being connected between the other end of the first inductor (L0) of the first boost conversion cell (110) and ground; and
wherein the second buck conversion cell (1111) also comprises two switches, a first switch (SBH1) being connected between the other end of the second inductor (L1) of the second boost conversion cell (111) and the power source (VIN) of the hybrid buck-boost power conversion system, and the second switch (SBL1) being connected between the other end of the second inductor (L1) of the second boost conversion cell (111) and ground.

## Patentansprüche

1. Hybrides Auf-/Abwärts-Leistungsumwandlungssystem (2800), das eine Vielzahl von Auf-/Abwärtszellen (2810-2813) umfasst, die in Kaskade zwischen einer Leistungsquelle (150) und einer Last (160) geschaltet sind, wobei die Auf-/Abwärtszellen (2810-2813) Folgendes umfassen:
N Abwärtswandlungszellen (110-113), die dazu konfiguriert sind, in M Betriebsphasen zu arbeiten, wobei N und M vorgegebene Ganzzahlen sind und wobei M kleiner oder gleich N ist und M größer oder gleich 2 ist;
zwei benachbarte Abwärtswandlungszellen der N Abwärtswandlungszellen (110-113), die dazu konfiguriert sind, in zwei unterschiedlichen Betriebsphasen zu arbeiten, wobei eine maximale Einschaltdauer jeder Abwärtswandlungszelle in einem Bereich von 1/M bis 1/2 liegt;
wobei die N Abwärtswandlungszellen (110-113) eine erste Abwärtswandlungszelle (110) und eine zweite Abwärtswandlungszelle (111, 112, 113) umfassen;
wobei die erste Abwärtswandlungszelle (110) eine Schalter-Induktor-Schalter-Zelle (SLS-Zelle) ist, die einen ersten Schalter (SH0), einen zweiten Schalter (SLO) und einen ersten Induktor (L0) umfasst, und wobei:
der erste Schalter (SH0) und der zweite Schalter (SLO) in Reihe zwischen einem Eingangsanschluss (C1IN) der ersten Abwärtswandlungszelle (110) und Masse geschaltet sind; und
der erste Induktor (L0) an seinem einen Ende an einen gemeinsamen Knoten des ersten Schalters (SH0) und des zweiten Schalters (SLO) angeschlossen ist;
wobei jede der anderen N-1 zweiten Abwärtswandlungszellen (111, 112, 113) eine Schalter-Kondensator-Induktor-Schalter-Zelle (SCLS-Zelle) ist, die einen dritten Schalter (SH1), einen Kondensator (C1), einen vierten Schalter (SL1) und einen zweiten Induktor (L1) umfasst, und wobei:
der dritte Schalter (SH1), der Kondensator (C1) und der vierte Schalter (SL1) in Reihe zwischen einem Eingangsanschluss (C2IN) der zweiten Abwärtswandlungszelle (111) und Masse geschaltet sind; und
der zweite Induktor (L1) an seinem einen Ende an einen gemeinsamen Knoten des Kondensators (C1) und des vierten Schalters (SL1) angeschlossen ist, und wobei:
der Eingangsanschluss (C1IN) der ersten Abwärtswandlungszelle (110) an einen gemeinsamen Knoten des dritten Schalters (SH1) und des Kondensators (C1) angeschlossen ist;
wobei die Auf-/Abwärtszellen (2810-2813) ferner eine erste und eine zweite Aufwärtswandlungszelle (1101-1131) umfassen, wobei die erste Abwärtswandlungszelle (110) und die erste Aufwärtswandlungszelle (1101) eine erste Auf-/Abwärtszelle (2810) bilden und jede zweite Abwärtswandlungszelle (111, 112, 113) und ihre entsprechende zweite Aufwärtswandlungszelle (1111, 1121, 1131) eine zweite Auf-/Abwärtszelle (2811, 2812, 2813) bilden;
wobei die erste Aufwärtswandlungszelle (1101) zwei Schalter umfasst, wobei ein erster Schalter (SBH0) zwischen dem anderen Ende des ersten Induktors (L0) der ersten Abwärtswandlungszelle (110) und einem Ausgangskondensator (C0) des hybriden Auf-/Abwärts-Leistungsumwandlungssystems angeschlossen ist und ein zweiter Schalter (SBL0) zwischen dem anderen Ende des ersten Induktors (L0) der ersten Abwärtswandlungszelle (110) und Masse angeschlossen ist; und
wobei die zweite Aufwärtswandlungszelle (1111) außerdem zwei Schalter umfasst, wobei ein erster Schalter (SBH1) zwischen dem anderen Ende des zweiten Induktors (L1) der zweiten Abwärtswandlungszelle (111) und dem Ausgangskondensator (C0) des hybriden Auf-/Abwärts-Leistungsumwandlungssystems angeschlossen ist und ein zweiter Schalter (SBL1) zwischen dem anderen Ende des zweiten Induktors (L1) der zweiten Abwärtswandlungszelle (111) und Masse angeschlossen ist.

2. System nach Anspruch 1, wobei:
die N Leistungsumwandlungszellen (110-113) dazu konfiguriert sind, in einem ersten verschachtelten Steuermodus zu arbeiten, wobei die N Leistungsumwandlungszellen (110-113) dazu konfiguriert sind, in N unterschiedlichen Betriebsphasen zu arbeiten, und wobei jede Leistungsumwandlungszelle der N Leistungsumwandlungszellen eine maximale Einschaltdauer von 1/N aufweist; und
wobei die N Leistungsumwandlungszellen (110-113) dazu konfiguriert sind, in einem zweiten verschachtelten Steuermodus zu arbeiten, wobei die N Leistungsumwandlungszellen (110-113) in N unterschiedlichen Betriebsphasen arbeiten und wobei jede Leistungsumwandlungszelle der N Leistungsumwandlungszellen (110-113) eine maximale Einschaltdauer von 1/2 aufweist.

3. System nach einem der Ansprüche 1-2, wobei:
die N Leistungsumwandlungszellen (110-113) dazu konfiguriert sind, im Normalbetrieb im ersten verschachtelten Steuermodus zu arbeiten, um die Ausgangswelligkeit zu minimieren; und
die N Leistungsumwandlungszellen (110-113) dazu konfiguriert sind, den ersten verschachtelten Steuermodus zu verlassen und in den zweiten verschachtelten Steuermodus zu wechseln, um das Lastsprungverhalten während eines Lastsprungs zu verbessern.

4. System nach einem der Ansprüche 2-3, wobei:
der erste verschachtelte Steuermodus unter einem perfekten verschachtelten Steuermechanismus ausgeführt wird; und
der zweite verschachtelte Steuermodus unter einem kaskadierten verschachtelten Steuermechanismus ausgeführt wird.

5. System nach einem der Ansprüche 1-2, wobei:
die N Leistungsumwandlungszellen (110-113) dazu konfiguriert sind, in einem dritten verschachtelten Steuermodus zu arbeiten, wobei die N Leistungsumwandlungszellen dazu konfiguriert sind, in zwei unterschiedlichen Betriebsphasen zu arbeiten, und wobei jede Leistungsumwandlungszelle der N Leistungsumwandlungszellen (110-113) eine maximale Einschaltdauer von 1/2 aufweist.

6. System nach einem der Ansprüche 1-5, wobei:
die N Leistungsumwandlungszellen (110-113) dazu konfiguriert sind, im Normalbetrieb im ersten verschachtelten Steuermodus zu arbeiten, um die Ausgangswelligkeit zu minimieren; und
die N Leistungsumwandlungszellen (110-113) dazu konfiguriert sind, den ersten verschachtelten Steuermodus zu verlassen und in den dritten verschachtelten Steuermodus zu wechseln, um das Lastsprungverhalten während eines Lastsprungs zu verbessern.

7. System nach einem der Ansprüche 5-6, wobei:
der erste verschachtelte Steuermodus unter einem perfekten verschachtelten Steuermechanismus ausgeführt wird; und
der dritte verschachtelte Steuermodus unter einem phasenverschobenen verschachtelten Steuermechanismus ausgeführt wird.

8. System nach einem der Ansprüche 5-7, wobei:
unter dem phasenverschobenen verschachtelten Steuermechanismus ungeradzahlige Leistungsumwandlungszellen der N Leistungsumwandlungszellen dazu konfiguriert sind, in einer ersten Betriebsphase zu arbeiten, und geradzahlige Leistungsumwandlungszellen der N Leistungsumwandlungszellen dazu konfiguriert sind, in einer zweiten Betriebsphase zu arbeiten.

9. Hybrides Auf-/Abwärts-Leistungsumwandlungssystem (3300, 3400), umfassend eine Vielzahl von Auf-/Abwärtszellen (2810-2813), die in Kaskade zwischen einer Last (160) und einer Leistungsquelle (150) geschaltet sind, wobei die Auf-/Abwärtszellen (2810-2813) Folgendes umfassen:
N Aufwärtswandlungszellen (110-113), die dazu konfiguriert sind, in M Betriebsphasen zu arbeiten, wobei N und M vorgegebene Ganzzahlen sind und wobei M kleiner oder gleich N ist und M größer oder gleich 2 ist;
wobei zwei benachbarte Aufwärtswandlungszellen der N Abwärtswandlungszellen (110-113) dazu konfiguriert sind, in zwei unterschiedlichen Betriebsphasen zu arbeiten, wobei eine maximale Einschaltdauer jeder Aufwärtswandlungszelle in einem Bereich von 1/M bis 1/2 liegt;
wobei die N Aufwärtswandlungszellen (110-113) eine erste Aufwärtswandlungszelle (110) und eine zweite Aufwärtswandlungszelle (111, 112, 113) umfassen;
wobei die erste Aufwärtswandlungszelle (110) eine Schalter-Induktor-Schalter-Zelle (SLS-Zelle) ist, die einen ersten Schalter (SH0), einen zweiten Schalter (SLO) und einen ersten Induktor (L0) umfasst, und wobei:
der erste Schalter (SH0) und der zweite Schalter (SLO) in Reihe zwischen einem Eingangsanschluss (C1IN) der ersten Aufwärtswandlungszelle (110) und Masse geschaltet sind; und
der erste Induktor (L0) an seinem einen Ende an einen gemeinsamen Knoten des ersten Schalters (SH0) und des zweiten Schalters (SLO) angeschlossen ist;
wobei jede der anderen N-1 zweiten Aufwärtswandlungszellen (111, 112, 113) eine Schalter-Kondensator-Induktor-Schalter-Zelle (SCLS-Zelle) ist, die einen dritten Schalter (SH1), einen Kondensator (C1), einen vierten Schalter (SL1) und einen zweiten Induktor (L1) umfasst, und wobei:
der dritte Schalter (SH1), der Kondensator (C1) und der vierte Schalter (SL1) in Reihe zwischen einem Eingangsanschluss (C2IN) der zweiten Aufwärtswandlungszelle (111) und Masse geschaltet sind; und
der zweite Induktor (L1) an seinem einen Ende an einen gemeinsamen Knoten des Kondensators (C1) und des vierten Schalters (SL1) angeschlossen ist, und wobei:
der Eingangsanschluss (C1IN) der ersten Aufwärtswandlungszelle (110) an einen gemeinsamen Knoten des dritten Schalters (SH1) und des Kondensators (C1) angeschlossen ist;
wobei die Auf-/Abwärtszellen (2810-2813) ferner eine erste und eine zweite Abwärtswandlungszelle (1101-1131) umfassen, wobei die erste Aufwärtswandlungszelle (110) und die erste Abwärtswandlungszelle (1101) eine erste Auf-/Abwärtszelle (2810) bilden und jede zweite Aufwärtswandlungszelle (111, 112, 113) und ihre entsprechende zweite Abwärtswandlungszelle (1111, 1121, 1131) eine zweite Auf-/Abwärtszelle (2811, 2812, 2813) bilden;
wobei die erste Abwärtswandlungszelle (1101) zwei Schalter umfasst, wobei ein erster Schalter (SBH0) zwischen dem anderen Ende des ersten Induktors (L0) der ersten Aufwärtswandlungszelle (110) und der Leistungsquelle (VIN) des hybriden Auf-/Abwärts-Leistungsumwandlungssystems angeschlossen ist und der zweite Schalter (SBL0) zwischen dem anderen Ende des ersten Induktors (L0) der ersten Aufwärtswandlungszelle (110) und Masse angeschlossen ist; und
wobei die zweite Abwärtswandlungszelle (1111) außerdem zwei Schalter umfasst, wobei ein erster Schalter (SBH1) zwischen dem anderen Ende des zweiten Induktors (L1) der zweiten Aufwärtswandlungszelle (111) und der Leistungsquelle (VIN) des hybriden Auf-/Abwärts-Leistungsumwandlungssystems angeschlossen ist und der zweite Schalter (SBL1) zwischen dem anderen Ende des zweiten Induktors (L1) der zweiten Aufwärtswandlungszelle (111) und Masse angeschlossen ist.

## Revendications

1. Système de conversion de puissance hybride abaisseur-élévateur (2800), comprenant une pluralité de cellules abaisseur-élévateur (2810-2813) connectées en cascade entre une source d'énergie (150) et une charge (160), les cellules abaisseur-élévateur (2810-2813) comprenant :
N cellules de conversion abaisseur (110-113) configurées pour fonctionner dans M phases de fonctionnement, dans lesquelles N et M sont des nombres entiers prédéterminés, et dans lesquelles M est inférieur ou égal à N et M est supérieur ou égal à 2 ;
deux cellules de conversion abaisseur adjacentes parmi les N cellules de conversion abaisseur (110-113) étant configurées pour fonctionner dans deux phases de fonctionnement différentes, dans lequel un cycle de service maximum de chaque cellule de conversion abaisseur est compris dans une plage de 1/M à 1/2 ;
dans lequel les N cellules de conversion abaisseur (110-113) comprennent une première cellule de conversion abaisseur (110) et une seconde cellule de conversion abaisseur (111, 112, 113) ;
dans lequel la première cellule de conversion abaisseur (110) est une cellule commutateur-inducteur-commutateur (SLS) comprenant un premier commutateur (SH0), un deuxième commutateur (SLO) et un premier inducteur (L0), et dans lequel :
le premier commutateur (SH0) et le deuxième commutateur (SLO) sont connectés en série entre une borne d'entrée (C1IN) de la première cellule de conversion abaisseur (110) et la masse ; et
le premier inducteur (L0) est connecté à sa première extrémité à un noeud commun du premier commutateur (SH0) et du deuxième commutateur (SLO) ;
dans lequel chacune des N-1 secondes cellules de conversion abaisseur (111, 112, 113) est une cellule commutateur-condensateur-inducteur-commutateur (SCLS) comprenant un troisième commutateur (SH1), un condensateur (C1), un quatrième commutateur (SL1) et un second inducteur (L1), et dans lequel :
le troisième commutateur (SH1), le condensateur (C1) et le quatrième commutateur (SL1) sont connectés en série entre une borne d'entrée (C2IN) de la seconde cellule de conversion abaisseur (111) et la masse ; et
le second inducteur (L1) est connecté à sa première extrémité à un noeud commun du condensateur (C1) et du quatrième commutateur (SL1), et dans lequel :
la borne d'entrée (C1IN) de la première cellule de conversion abaisseur (110) est connectée à un noeud commun du troisième commutateur (SH1) et du condensateur (C1) ;
les cellules abaisseur-élévateur (2810-2813) comprenant en outre une première et une seconde cellule de conversion élévateur (1101-1131), la première cellule de conversion abaisseur (110) et la première cellule de conversion élévateur (1101) formant une première cellule abaisseur-élévateur (2810), et chaque seconde cellule de conversion abaisseur (111, 112, 113) et sa seconde cellule de conversion élévateur (1111, 1121, 1131) correspondante formant une seconde cellule abaisseur-élévateur (2811, 2812, 2813) ;
dans lequel la première cellule de conversion élévateur (1101) comprend deux commutateurs, un premier commutateur (SBH0) étant connecté entre l'autre extrémité du premier inducteur (L0) de la première cellule de conversion abaisseur (110) et un condensateur de sortie (C0) du système de conversion de puissance hybride abaisseur-élévateur, et le deuxième commutateur (SBL0) étant connecté entre l'autre extrémité du premier inducteur (L0) de la première cellule de conversion abaisseur (110) et la masse ; et
dans lequel la seconde cellule de conversion élévateur (1111) comprend également deux commutateurs, un premier commutateur (SBH1) étant connecté entre l'autre extrémité du second inducteur (L1) de la seconde cellule de conversion abaisseur (111) et le condensateur de sortie (C0) du système de conversion de puissance hybride abaisseur-élévateur, et le deuxième commutateur (SBL1) étant connecté entre l'autre extrémité du second inducteur (L1) de la seconde cellule de conversion abaisseur (111) et la masse.

2. Système selon la revendication 1, dans lequel :
les N cellules de conversion de puissance (110-113) sont configurées pour fonctionner dans un premier mode de commande entrelacée, dans lequel les N cellules de conversion de puissance (110-113) sont configurées pour fonctionner dans N phases de fonctionnement différentes, et dans lequel chaque cellule de conversion de puissance des N cellules de conversion de puissance ont un cycle de service maximum de 1/N ; et
dans lequel les N cellules de conversion de puissance (110-113) sont configurées pour fonctionner dans un deuxième mode de commande entrelacée, dans lequel les N cellules de conversion de puissance (110-113) fonctionnent dans N phases de fonctionnement différentes, et dans lequel chaque cellule de conversion de puissance des N cellules de conversion de puissance (110-113) ont un cycle de service maximum de 1/2.

3. Système selon l'une quelconque des revendications 1 et 2, dans lequel ;
les N cellules de conversion de puissance (110-113) sont configurées pour fonctionner en fonctionnement normal dans le premier mode de commande entrelacée afin de minimiser l'ondulation de sortie ; et
les N cellules de conversion de puissance (110-113) sont configurées pour quitter le premier mode de commande entrelacée et entrer dans le deuxième mode de commande entrelacée pour améliorer la réponse transitoire de charge pendant un transitoire de charge.

4. Système selon l'une quelconque des revendications 2 et 3, dans lequel :
le premier mode de commande entrelacée est réalisé dans le cadre d'un mécanisme de commande entrelacée parfait ; et
le deuxième mode de commande entrelacée est réalisé dans le cadre d'un mécanisme de commande entrelacée en cascade.

5. Système selon l'une quelconque des revendications 1 et 2, dans lequel :
les N cellules de conversion de puissance (110-113) sont configurées pour fonctionner dans un troisième mode de commande entrelacée, dans lequel les N cellules de conversion de puissance sont configurées pour fonctionner dans deux phases de fonctionnement différentes, et dans lequel chaque cellule de conversion de puissance des N cellules de conversion de puissance (110-113) ont un cycle de service maximum de 1/2.

6. Système selon l'une quelconque des revendications 1 à 5, dans lequel :
les N cellules de conversion de puissance (110-113) sont configurées pour fonctionner en fonctionnement normal dans le premier mode de commande entrelacée afin de minimiser l'ondulation de sortie ; et
les N cellules de conversion de puissance (110-113) sont configurées pour quitter le premier mode de commande entrelacée et entrer dans le troisième mode de commande entrelacée pour améliorer la réponse transitoire de charge pendant un transitoire de charge.

7. Système selon l'une quelconque des revendications 5 à 6, dans lequel :
le premier mode de commande entrelacée est réalisé dans le cadre d'un mécanisme de commande entrelacée parfait ; et
le troisième mode de commande entrelacée est réalisé dans le cadre d'un mécanisme de commande entrelacée déphasé.

8. Système selon l'une quelconque des revendications 5 à 7, dans lequel :
dans le cadre d'un mécanisme de commande entrelacée déphasé, les cellules de conversion de puissance impaires parmi les N cellules de conversion de puissance sont configurées pour fonctionner dans une première phase de fonctionnement, et les cellules de conversion de puissance paires parmi les N cellules de conversion de puissance sont configurées pour fonctionner dans une seconde phase de fonctionnement.

9. Système de conversion de puissance hybride abaisseur-élévateur (3300, 3400), comprenant une pluralité de cellules abaisseur-élévateur (2810-2813) connectées en cascade entre une charge (160) et une source d'énergie (150), les cellules abaisseur-élévateur (2810-2813) comprenant :
N cellules de conversion élévateur (110-113) configurées pour fonctionner dans M phases de fonctionnement, dans lesquelles N et M sont des nombres entiers prédéterminés, et dans lesquelles M est inférieur ou égal à N et M est supérieur ou égal à 2 ;
deux cellules de conversion élévateur adjacentes parmi les N cellules de conversion abaisseur (110-113) étant configurées pour fonctionner dans deux phases de fonctionnement différentes, dans lequel un cycle de service maximum de chaque cellule de conversion élévateur est compris dans une plage de 1/M à 1/2 ;
dans lequel les N cellules de conversion élévateur (110-113) comprennent une première cellule de conversion élévateur (110) et une seconde cellule de conversion élévateur (111, 112, 113) ;
dans lequel la première cellule de conversion élévateur (110) est une cellule commutateur-inducteur-commutateur (SLS) comprenant un premier commutateur (SH0), un deuxième commutateur (SLO) et un premier inducteur (L0), et dans lequel :
le premier commutateur (SH0) et le deuxième commutateur (SLO) sont connectés en série entre une borne d'entrée (C1IN) de la première cellule de conversion élévateur (110) et la masse ; et
le premier inducteur (L0) est connecté à sa première extrémité à un noeud commun du premier commutateur (SH0) et du deuxième commutateur (SLO) ;
dans lequel chacune des autres N-1 secondes cellules de conversion élévateur (111, 112, 113) est une cellule commutateur-condensateur-inducteur-commutateur (SCLS) comprenant un troisième commutateur (SH1), un condensateur (C1), un quatrième commutateur (SL1) et un second inducteur (L1), et dans lequel :
le troisième commutateur (SH1), le condensateur (C1) et le quatrième commutateur (SL1) sont connectés en série entre une borne d'entrée (C2IN) de la seconde cellule de conversion élévateur (111) et la masse ; et
le second inducteur (L1) est connecté à sa première extrémité à un noeud commun du condensateur (C1) et du quatrième commutateur (SL1), et dans lequel :
la borne d'entrée (C1IN) de la première cellule de conversion élévateur (110) est connectée à un noeud commun du troisième commutateur (SH1) et du condensateur (C1) ;
les cellules abaisseur-élévateur (2810-2813) comprenant en outre une première et une seconde cellule de conversion abaisseur (1101-1131), la première cellule de conversion élévateur (110) et la première cellule de conversion abaisseur (1101) formant une première cellule abaisseur-élévateur (2810), et chaque seconde cellule de conversion élévateur (111, 112, 113) et sa seconde cellule de conversion abaisseur (1111, 1121, 1131) correspondante formant une seconde cellule abaisseur-élévateur (2811, 2812, 2813) ;
dans lequel la première cellule de conversion abaisseur (1101) comprend deux commutateurs, un premier commutateur (SBH0) étant connecté entre l'autre extrémité du premier inducteur (L0) de la première cellule de conversion élévateur (110) et la source d'énergie (VIN) du système de conversion de puissance hybride abaisseur-élévateur, et le deuxième commutateur (SBL0) étant connecté entre l'autre extrémité du premier inducteur (L0) de la première cellule de conversion élévateur (110) et la masse ; et
dans lequel la seconde cellule de conversion abaisseur (1111) comprend également deux commutateurs, un premier commutateur (SBH1) étant connecté entre l'autre extrémité du second inducteur (L1) de la seconde cellule de conversion élévateur (111) et la source d'énergie (VIN) du système de conversion de puissance hybride abaisseur-élévateur, et le deuxième commutateur (SBL1) étant connecté entre l'autre extrémité du second inducteur (L1) de la seconde cellule de conversion élévateur (111) et la masse.
